# EUROPEAN PATENT APPLICATION

(11) **EP 4 514 042 A1**
(43) Date of publication of application: **26.02.2025**
(21) Application number: 23791709.1
(22) Date of filing: 07.04.2023
(51) Int. Cl.: H04W 72/54, H04W 4/40, H04W 16/14, H04W 72/0446, H04W 92/18

(54) **COMMUNICATION DEVICE AND COMMUNICATION METHOD**

(30) Priority: 20.04.2022 JP 2022069209
(71) Applicant: Panasonic Intellectual Property Corporation of America, Torrance, CA 90504 (US)
(72) Inventor: HORIUCHI, Ayako, Kadoma-shi, Osaka 571-0057 (JP); SUZUKI, Hidetoshi, Kadoma-shi, Osaka 571-0057 (JP); NUNOME, Tomoya, Kadoma-shi, Osaka 571-0057 (JP)
(74) Representative: Grünecker Patent- und Rechtsanwälte PartG mbB
(86) International application number: PCT/JP2023/014432
(87) International publication number: WO 2023/204060

(57) **Abstract**

This communication device comprises: a control circuit which determines a transmission time for a transmission signal on the basis of a sensing interval corresponding to a sensing method for checking the availability of a channel; and a transmission circuit which transmits the transmission signal during the transmission time.

## Description

### Technical Field

The present disclosure relates to a communication apparatus and a communication method.

### Background Art

Enhancement of a communication system called the 5th Generation mobile communication system (5G) has been studied. The 3rd Generation Partnership Project (3GPP), which is an international standards-developing organization, has been studying development of a communication system in terms of both the development of the Long Term Evolution (LTE) system and New Radio (NR). For example, with enhanced communication capacity, the utilization of an unlicensed band in addition to a licensed band has been studied in the 3GPP.

### Citation List

### Non-Patent Literature

NPL 1
   3GPP, TR 38.885 V16.0.0, "Study on NR Vehicle-to-Everything (V2X)"
NPL 2
   RP-201385, "WID revision: NR sidelink enhancement," LG Electronics, June 29 - July 3, 2020
NPL 3
   RP-213678, "New WID on NR sidelink evolution," OPPO, LG Electronics, Dec. 6 - 17, 2021
NPL 4
   3GPP, TS 37.213 V17.1.0, "Physical layer procedures for shared spectrum channel access,"

### Summary of Invention

There is room for consideration, however, with respect to the effective utilization of communication resources in an unlicensed band.

One non-limiting and exemplary embodiment of the present disclosure facilitates providing a communication apparatus and a communication method each capable of improving the resource utilization efficiency of communication in an unlicensed band.

A communication apparatus according to an exemplary embodiment of the present disclosure includes: control circuitry, which, in operation, determines a transmission time for a transmission signal based on a sensing interval according to a sensing method for confirming availability of a channel; and transmission circuitry, which, in operation, transmits the transmission signal during the transmission time.

It should be noted that general or specific embodiments may be implemented as a system, a method, an integrated circuit, a computer program, a storage medium, or any selective combination thereof.

According to an exemplary embodiment of the present disclosure, it is possible to improve the resource utilization efficiency of communication in an unlicensed band.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates exemplary mapping of PSCCH, PSSCH, and PSFCH in a slot;
FIG. 2A is a block diagram illustrating an exemplary configuration of a part of a base station;
FIG. 2B is a block diagram illustrating an exemplary configuration of a part of a terminal;
FIG. 3A illustrates an example of sidelink communication in a licensed band;
FIG. 3B illustrates an example of sidelink communication in Operation Example 1-1 of Embodiment 1;
FIG. 4 illustrates an example of sidelink communication in Operation Example 1-2 of Embodiment 1;
FIG. 5 is a block diagram illustrating a configuration of the terminal according to Embodiment 1;
FIG. 6 illustrates a first example of sidelink communication in Operation Example 2-1 of Embodiment 2;
FIG. 7 illustrates an example of a resource for sidelink communication in a variation of Operation Example 2-1 of Embodiment 2;
FIG. 8 illustrates an example of a resource for sidelink communication in Operation Example 2-2 of Embodiment 2;
FIG. 9 is a block diagram illustrating a configuration of the terminal according to Embodiment 2;
FIG. 10 illustrates an example of a resource for sidelink communication in Operation Example 3-1 of Embodiment 3;
FIG. 11 illustrates a first example of sidelink communication in Operation Example 4-1 of Embodiment 4;
FIG. 12 illustrates a second example of sidelink communication in Operation Example 4-1 of Embodiment 4;
FIG. 13 illustrates a third example of sidelink communication in Operation Example 4-1 of Embodiment 4;
FIG. 14 illustrates an exemplary architecture for a 3GPP NR system;
FIG. 15 is a schematic diagram illustrating a functional split between NG-RAN and 5GC;
FIG. 16 is a sequence diagram of a radio resource control (RRC) connection setup/reconfiguration procedure;
FIG. 17 is a schematic diagram illustrating usage scenarios of enhanced Mobile BroadBand (eMBB), massive Machine Type Communications (mMTC), and Ultra Reliable and Low Latency Communications (URLLC); and
FIG. 18 is a block diagram illustrating an exemplary 5G system architecture for a non-roaming scenario.

### Description of Embodiments

Hereinafter, embodiments of the present disclosure will be described in detail with reference to the drawings.

### [Vehicle to X (V2X)]

Enhancement of a communication system called the 5th Generation mobile communication system (5G) has been studied. In 5G, it has been discussed to flexibly provide functions for each of use cases that require an increase in communication traffic, an increase in the number of terminals to be connected, high reliability, and low latency.

In the 3rd Generation Partnership Project (3GPP), which is an international standards-developing organization, has been studying development of a communication systems in terms of both the development of the Long Term Evolution (LTE) system and New Radio (NR). In 3GPP, it has been first considered to support vehicle to X (V2X) in the LTE system. It is also considered to support V2X in NR in which a band broader than in LTE is available (see, for example, NPL 1).

In addition, not only V2X, but also further enhancement of communication using sidelink have been studied (see, for example, NPL 2). V2X assumes Vehicle to Vehicle (V2V), Vehicle to Infrastructure (V2I), Vehicle to Pedestrian (V2P), and Vehicle to Network (V2N) communication.

In the V2V, V2I, and V2P, terminals can directly transmit and receive signals to and from each other using a link called sidelink (SL) or PC5 without through a network with a base station (for example, a network through a base station). V2N assumes communication through a link called Uu between a base station and a terminal. Note that, the base station may be referred to as gNB in NR or as eNB in LTE.

Further, utilization of sidelink communication in an unlicensed band has also been studied (see, for example, NPL 3).

### [NR Sidelink]

In NR sidelink, unicast, groupcast, and broadcast are supported in transmission and reception. In unicast, one-to-one transmission from a transmission terminal (for example, referred to as Tx UE) to a reception terminal (for example, referred to as Rx UE) is assumed. In groupcast, transmission from a transmission terminal to one or more reception terminals included in a certain group is assumed. In broadcast, transmission from a transmission terminal without identifying a reception terminal is assumed.

In NR sidelink, a control signal called sidelink control information (SCI) is transmitted and received. The SCI may also be referred to as control information. The SCI is divided into the 1st-stage SCI and the 2nd-stage SCI. The 1st-stage SCI is mapped to the physical SL control channel (PSCCH). The 2nd-stage SCI is mapped to at least a part of the physical SL shared channel (PSSCH) through which data is transmitted and received. By dividing the SCI into two, the number of bits and the size of the 1st-stage SCI can be reduced. In the sidelink, there is a function in which a particular terminal (for example, terminal A) receives a PSCCH transmitted from another terminal different from terminal A, and after grasping the usage situation of the resource of the other terminal, determines the resource to be used for transmission by terminal A. This function is also called sensing. Note that, in the following description, terms such as terminal A, terminal B, terminal C, terminal X, and terminal Y may be used to distinguish between different terminals.

Note that, in the sidelink, signals are transmitted and received through the following channels.
- Physical SL control channel (PSCCH): 1st-stage SCI (sidelink control information) is mapped to a PSCCH.
- Physical SL shared channel (PSSCH): a data signal and 2nd-stage SCI are mapped to a PSSCH.
- Physical SL feedback channel (PSFCH): a feedback signal for a PSSCH is mapped to a PSFCH. The feedback signal indicates, for example, an acknowledgement (ACK) indicating that reception of the PSSCH is successful, or a negative acknowledgement (NACK) indicating that the reception of the PSSCH is not successful. The feedback signal is applicable in a case where a PSSCH is transmitted by unicast or groupcast. Further, in Release 17 (Rel. 17) and thereafter, as Inter-UE coordination, a PSFCH may be transmitted in a case where a collision is detected.
- Physical SL broadcast channel (PSBCH): a broadcast signal is mapped to a PSBCH. The PSBCH is transmitted together with a signal for synchronization. The signal for synchronization is, for example, a sidelink Primary synchronization signal (S-PSS) and/or a sidelink Secondary synchronization signal (S-SSS). The PSBCH to be transmitted together with a signal for synchronization is also referred to as a sidelink synchronization signal block (S-SSB).

Note that, the signal to be transmitted or received in the sidelink may be referred to as a sidelink signal. Further, for example, "transmission of information (or a signal) mapped to a PSCCH" may be abbreviated to "PSCCH transmission". Further, in the following description, the PSCCH may refer to a resource defined as a PSCCH or information (or a signal) mapped to a resource defined as a PSCCH. Even in channels other than PSCCH, abbreviations may be made in the same manner as the PSCCH.

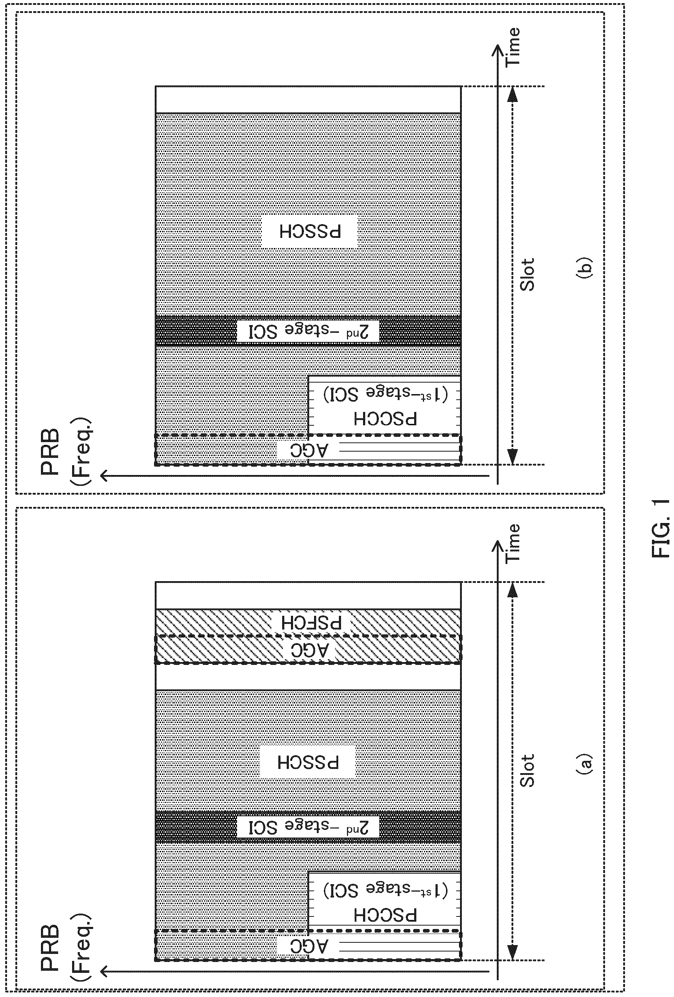

FIG. 1 illustrates exemplary mapping of PSCCH, PSSCH, and PSFCH in a slot. The horizontal axis in FIG. 1 represents the time axis, and the vertical axis represents the frequency axis in PRB (physical resource block) units. FIG. 1 illustrates two examples of Example (a) and Example (b).

Note that, as illustrated in Example (a), the PSFCH may be mapped. Alternatively, as illustrated in Example (b), the PSFCH may not be mapped due to a configuration. In a case where the PSFCH is not mapped, the area of the PSSCH may be increased.

The number of symbols of the sidelink signal in the slot may be variable according to a configuration. Further, the mapping of the 2nd-stage SCI is changed due to mapping of the DMRS of the PSSCH, which is not illustrated. The 1st-stage SCI is mapped starting from the lowest frequency resource among frequency resources to which the PSSCH is assigned. For auto gain control (AGC), copies of the starting symbols of the PSCCH and the PSSCH are mapped to the symbols before the starting symbols of the PSCCH and the PSSCH. Further, as illustrated in Example (a), a copy of the PSFCH is also mapped before the symbol of the PSFCH for AGC.

Further, in Example (a), a gap for switching between transmission and reception is mapped in the interval between the PSSCH and the PSFCH and in the interval after the last symbol of the PSFCH. In Example (b), a gap for switching between transmission and reception is mapped in the interval after the last symbol of the PSSCH. The gap may correspond to an interval in which no signal is transmitted or received.

The sidelink communication in NR includes two modes that are referred to as Mode 1 and Mode 2. In Mode 1, the base station determines a resource to be used by the terminal for the sidelink. In Mode 2, the terminal determines a resource to be used for the sidelink from resources in a resource pool configured in advance. Mode 1 represents a state in which the base station and the terminal are connected with each other, and is assumed to be used in an environment in which the terminal performing sidelink communication can receive an instruction from the base station. In Mode 2, the terminal can perform transmission in the sidelink without an instruction from the base station, and thus, sidelink communication can be performed with terminal under a different operator and/or a terminal existing outside the coverage of the base station.

### [Background NR-U]

With enhanced communication capacity, the utilization of an unlicensed band in addition to a licensed band has also been studied in the 3GPP. NR that utilizes an unlicensed band is also referred to as NR-U (unlicensed). In NR-U, operations to ensure fairness in coexistence with other apparatuses, such as LAA (Licensed Assisted Access) based on Wifi (registered trademark) and/or LTE, are added and enhanced.

In the unlicensed band, a communication apparatus (for example, the base station or the terminal in NR-U) performs Listen Before Talk (LBT) in order to ensure fairness with other apparatuses, and starts transmission after confirming that another apparatus is not transmitting a signal nearby. The term LBT may be replaced with other terms such as carrier sense or sensing. The communication apparatus performs the LBT and confirms that another apparatus is not transmitting a signal nearby, and then a channel occupancy time (COT), which is the time of a channel occupancy, is configured. In the COT, the communication apparatus can transmit and receive signals in DL (downlink) resources and UL (uplink) resources.

There are two operation methods for the LBT. The first operation method is load based equipment (LBE). In LBE, when a communication apparatus acquires the COT, the communication apparatus performs Type 1 LBT (also referred to as category 4 LBT). Further, in a portion other than the head of the COT, the communication apparatus can perform Type 2 LBT and can start transmission after performing Type 2 LBT.

Note that, in the following description, the communication apparatus (for example, the base station or the terminal) "starts transmission after performing the LBT" corresponds to the communication apparatus starting transmission after confirming that the LBT has been performed and that no other apparatus is transmitting a signal nearby.

Table 1 illustrates examples of the sensing interval of LBT for transmission right acquisition in LBE and the applicable interval.

**[Table 1]**

| | Sensing interval | Applicable gap duration | |
|---|---|---|---|
| Type 1 (cat 4 LBT) | Determined by random backoff value | - | In a case where gNB (base station) or UE (terminal) acquires COT |
| | Extended when acquisition of the transmission right is unsuccessful | | |
| Type 2A (cat 2 LBT) | 25 µs | - | Transmission of DRS (Discovery Reference Signal) |
| | | 25 µs | Transmission in COT |
| Type 2B (cat 2 LBT) | 16 µs | 16 µs | Transmission in COT |
| Type 2C (cat 1 LBT) | (Not sense) | < 16 us for LBE | Transmission in COT |

In Type 1 LBT, each parameter related to LBT is configured by configuring the Channel Access Priority Class. Table 2 illustrates examples of the configuration of each parameter indicated in NPL 4. Table 2 illustrates the correspondence relationship between the Channel Access Priority Class and each parameter.

**[Table 2]**

| Channel Access Priority Class (p) | mₚ | CW_(min,p) | CW_(max,p) | T_(mcot,p) | allowed CW_p sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127, 255,511,1023} |

In a case where the terminal (an example of the communication apparatus) repeats carrier sensing during a sensing interval of 16+9*mₚ and a sensing interval of 9*N, and confirms that the channel is available, the terminal can start transmission. Note that, a state in which the channel is available is called an idle state, and a state in which the channel is unavailable (for example, a state in which the channel is used) may be called a busy state. Confirming that the channel is available may involve confirming that another apparatus is not transmitting a signal. Further, the term sensing interval may be replaced with other terms such as sensing time, sensing period, sensing duration, carrier sensing interval, or the like.

The value of N is decreased (counted down) by one each time it is confirmed that the channel is available. In a case where the channel is used (busy), the countdown of N is temporarily stopped, and after confirming that the channel is available for an interval of 16+9*mₚ, the countdown is resumed. The initial value of N is randomly selected from 0 to CW_p. CW_p is selected from the allowed CW_p sizes. The initial value of CW_p is CW_(min,p). In a case where communication errors exceeding a specified number occur due to collision in the previous transmission, the value of CW_p is increased by one step. For example, in a case where the Channel Access Priority Class p = 1 and CW_p = CW_(min,p), CW_p is 3 according to Table 2. In this case, the initial value of N is configured randomly from among 0 to 3, that is, from among {0, 1, 2, 3}. For example, the sensing intervals in a case where the initial values of N are 0, 1, 2, and 3 are 25 µs, 34 µs, 43 µs, and 52 µs, respectively.

In Type 2A, when the interval between two temporally continuous resources is 25 µs, the terminal performs LBT within 25 µs. In a case where the terminal does not confirm transmission of another apparatus in the LBT, the terminal can start transmission. In Type 2B, when the interval between two temporally continuous resources is 16 µs, the terminal performs the LBT in 16 µs. In a case where the terminal does not confirm transmission of another apparatus, the terminal can start transmission. In Type 2C, in a case where the interval between two temporally continuous resources is less than 16 microseconds, the terminal can start transmission without the LBT. Note that, exceptionally, in the case of DRS (Discovery Reference Signal) transmission, due to the short transmission time for the DRS, Type 2ALBT instead of Type 1 LBT is performed, and the transmission can be started.

Type 1 LBT, Type 2A LBT, Type 2B LBT, and Type 2C LBT are examples of sensing methods for confirming availability of the channel. As described above, the sensing interval is defined according to the sensing method.

A second operation method is frame based equipment (FBE). The FBE is an operation in which it is assumed that other equipment such as Wifi is not installed in the same space, the frame period is fixed, and the LBT is performed at the head of the frame to acquire the COT. In the FBE, the COT can be acquired only from the head of the fixed frame period. Further, the FBE is defined to include an idle period of 5% or more for each fixed frame period.

In each of the following embodiments, an example in which sidelink communication is performed in an unlicensed band will be described.

In sidelink communication, even in a case where all fourteen symbols in the slot can be used for sidelink communication, the last symbol becomes a guard symbol in which transmission and reception cannot be performed, by assuming the time required to switch the terminal between transmission and reception.

Table 3 illustrates the correspondence relationship between the SCS (Subcarrier Spacing) and the duration of one symbol (Symbol duration). As illustrated in Table 3, the duration of one symbol varies depending on the SCS.

**[Table 3]**

| SCS | Symbol duration (µs) |
|---|---|
| 15 kHz | 66.67 |
| 30 kHz | 33.33 |
| 60 kHz | 16.67 |

In a case where transmission is performed using Type 1 LBT in an unlicensed band, for example, when the Channel Access Priority Class is 1 and the initial value of N is selected from {0, 1, 2, 3}, the sensing intervals in the cases of the initial values of N being 0, 1, 2, and 3 are 25 µs, 34 µs, 43 µs, and 52 µs, respectively. For this reason, the terminal performs sensing during 25 µs, 34 µs, 43 µs, or 52 µs before starting transmission. In a case where the sensing result confirms that the channel is available, the terminal can start transmission.

In a case where the sensing interval (for example, 25 µs, 34 µs, 43 µs, and 52 µs) is longer than the duration of one symbol, there is a possibility that performing Type 1 LBT with one symbol will not be in time for the transmission start at the head of the slot. For example, a case where Type 1 LBT is performed with one symbol is a case where Type 1 LBT is performed in the last one symbol (for example, a guard symbol) of a slot for sidelink communication.

Further, in a case where Type 2 LBT is performed, when the time interval between two resources that are continuously mapped in the time direction is 25 µs or more, the transmission in the two resources is not recognized as a transmission in the COT. For example, in the case of the SCSs of 15 kHz and 30 kHz, the duration of one symbol is equal to or longer than 25 µs, and thus, two resources across slots may not be recognized as the same COT. For example, in a case where the last symbol of the slot is a guard symbol, the interval between slots becomes 25 µs, and thus, the two resources across the slots are not recognized as the same COT. In a case where the two resources are not recognized as the same COT, Type 2 LBT cannot be performed, and Type 1 LBT is performed. As a result, the sensing interval becomes long, and the resource is not effectively utilized.

In a non-limiting and exemplary embodiment of the present disclosure, a method for improving the resource utilization efficiency of sidelink communication in an unlicensed band will be described.

For example, in each of the embodiments to be described later, the duration of the interval of a sidelink signal is adjusted by controlling the transmission time for the sidelink signal based on the sensing interval, and signal transmission is performed at an appropriate timing after the LBT is performed. Thus, the resource utilization efficiency of sidelink communication can be improved.

Note that, in each of the embodiments to be described later, the present disclosure exemplifies sidelink communication, but the present disclosure is not limited to sidelink communication.

### [Overview of Communication System]

A communication system according to an embodiment of the present disclosure includes base station 100 and terminal 200.

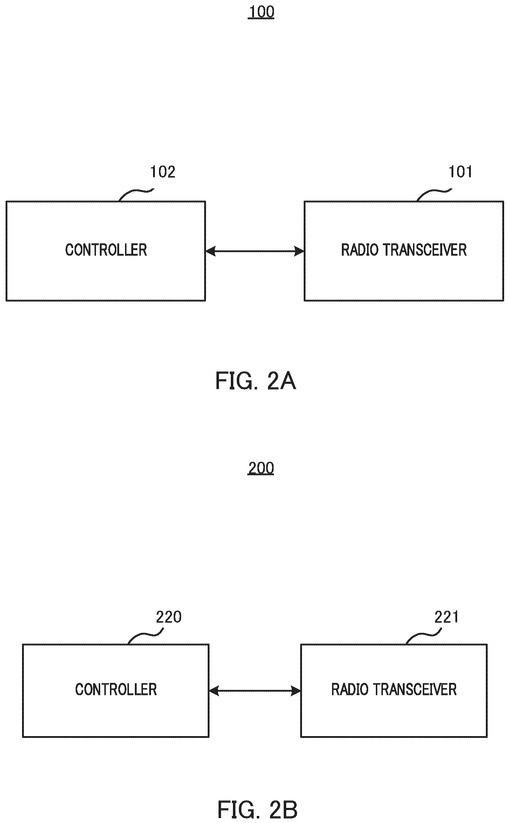

FIG. 2A is a block diagram illustrating an exemplary configuration of a part of base station 100. In base station 100 illustrated in FIG. 2A, controller 102 controls communication via a link called Uu between terminal 200 and base station 100. Radio transceiver 101 transmits a signal via a link called Uu under the control of controller 102. Further, controller 102 may perform control related to sidelink communication between a plurality of terminals (for example, resource determination in Mode 1).

FIG. 2B is a block diagram illustrating an exemplary configuration of a part of terminal 200. In terminal 200 illustrated in FIG. 2B, controller 220 (corresponding to, for example, the control circuitry) determines the transmission time for a transmission signal based on a sensing interval according to a sensing method for confirming availability of a channel. Further, radio transceiver 221 (corresponding to, for example, the transmission circuitry) transmits the transmission signal during the determined transmission time. Note that, the transmission signal may be, for example, a sidelink signal, or may be a signal different from a sidelink signal. Further, the determination of the transmission time for the transmission signal may correspond to the determination of the timing of the end (ending time or ending timing) of transmission, the determination of the timing of the start (starting time or starting timing) of transmission, and/or the determination of at least one transmission interval.

### (Embodiment 1)

In Embodiment 1, the duration of a sidelink signal (the duration of a resource used for sidelink communication) is shortened, and a guard symbol is added between slots. According to Embodiment 1, in a case where Type 1 LBT is performed and the channel is in an idle state, transmission can start from the head of a slot after performing Type 1 LBT.

### [Operation Example 1-1]

In Operation Example 1-1, the terminal that transmits a sidelink signal shortens the time domain duration of the PSSCH. By shortening the time domain duration of the PSSCH, a sensing interval is provided in which the terminal that transmits a sidelink signal in an unlicensed band performs sensing before transmission whether another transmission does not exist.

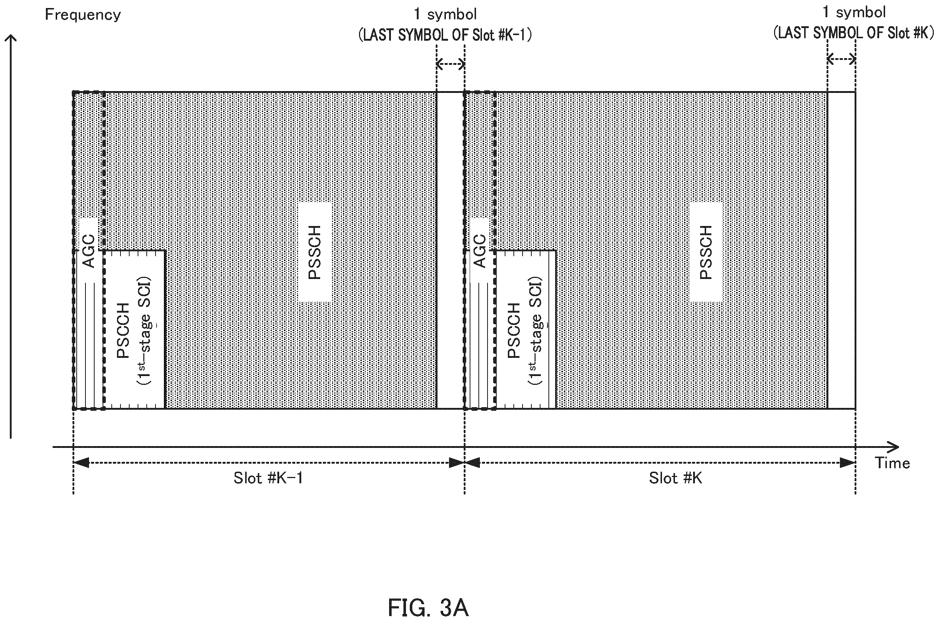

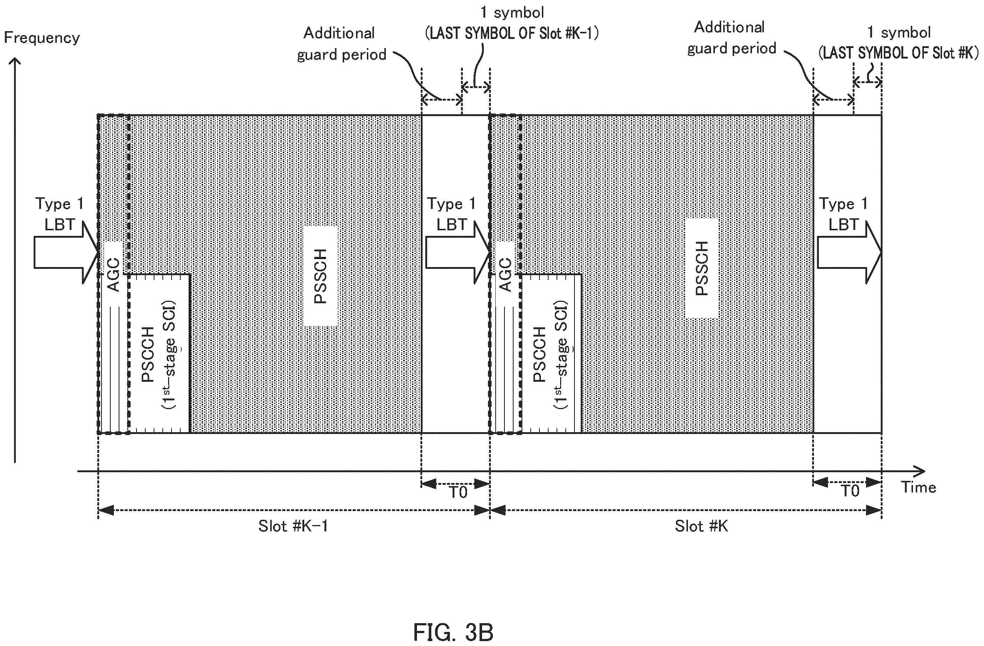

FIG. 3A illustrates an example of sidelink communication in a licensed band. FIG. 3B illustrates an example of sidelink communication in Operation Example 1-1 of Embodiment 1. The horizontal axes in FIGS. 3A and 3B represent the time axes, and the vertical axes represent the frequency axes. Note that, hereinafter, the resource of the 2nd stage SCI is included in the PSSCH, and thus, the resource of the 2nd stage SCI is not explicitly illustrated.

As illustrated in FIG. 3A, in a case where the number of symbols included in one slot of the sidelink communication is fourteen symbols in a licensed band, the last symbol is a guard symbol.

As illustrated in FIG. 3B, in Embodiment 1, a time interval in which no signal is transmitted is added to an unlicensed band to secure a sensing interval. In the example of FIG. 3B, a time interval called "additional guard period" is added to the last symbol of each slot, which is a guard symbol. In the example of interval T0, which includes the guard symbol and the "additional guard period" in FIG. 3B, Type 1 LBT is performed.

In the additional guard period, no signal is transmitted. In other words, in the example of FIG. 3B, the time domain duration of the PSSCH to be transmitted in each slot is shortened by the duration corresponding to the time of the additional guard period. The duration of the additional guard period may correspond to the duration shortened in the time domain of the PSSCH.

Note that, the duration of the additional guard period may not be an integer multiple of the duration of a symbol, and may be an integer multiple of the duration of a symbol. In other words, the time domain duration of the PSSCH may not be shortened in units of symbols, but it can be shortened in units of symbols. Note that, in a case where the duration of the additional guard period is an integer multiple of the duration of a symbol, the additional guard period may be referred to as an "Additional guard symbol".

For example, when the time domain duration of the PSSCH is shortened in units of symbols, the last symbol of the slot is configured as a guard symbol in the format of the sidelink communication, and thus, as illustrated in FIG. 3B, the Additional guard symbol in units of symbols is added to the one-symbol guard symbol.

Table 4 illustrates the relationship between the SCS and the Additional guard symbol. Table 4 associates among the duration of an SCS, the duration of a symbol ("Symbol duration" in Table 4) corresponding to the SCS, and the number of Additional guard symbols defined with respect to the duration of the symbol. Note that, the number of Additional guard symbols is defined for each of cases where the sensing intervals are 25 µs, 34 µs, 43 µs, and 52 µs. As illustrated in Table 4, the number of Additional guard symbols may vary for each SCS or may vary depending on the sensing interval. For example, the terminal adds the number of Additional guard symbols illustrated in Table 4 as a guard symbol(s) between slots.

**[Table 4]**

| | Symbol duration (µs) | The number of additional guard symbols | | | |
|---|---|---|---|---|---|
| SCS | | 25µs | 34µs | 43µs | 52µs |
| 15 kHz | 66.67 | - | - | - | - |
| 30 kHz | 33.33 | - | 1 symbol | 1 symbol | 1 symbol |
| 60 kHz | 16.67 | 1 symbol | 1 symbol | 2 symbols | 3 symbols |

For example, in Table 4, the duration of a symbol for the SCS of 15 kHz is 66.67 µs, and thus, the duration of the guard symbol, which is the last symbol of the slot in the format of the sidelink communication (that is, 66.67 µs), is larger than that of any of the sensing intervals, which are 25 µs, 34 µs, 43 µs, and 52 µs. Accordingly, in a case where the SCS is 15 kHz, the Additional guard symbol may be zero for any sensing interval. Further, for example, the duration of a symbol for the SCS of 60 kHz is 16.67 µs, and thus, a total of two guard symbols are required to secure the sensing interval of 25 µs. For this reason, the Additional guard symbol of one symbol is added as the guard symbol, which is the last symbol of the slot in the format of the sidelink communication.

The sensing interval required for Type 1 LBT (hereinafter referred to as "the sensing interval of Type 1 LBT") varies depending on at least one of the Channel Access Priority Class, whether there has been a collision in a previous transmission, and a randomly selected value. For example, as illustrated in Table 2, the initial value of N for determining the sensing interval of Type 1 LBT is randomly selected from candidates determined by the Channel Access Priority Class. Then, the value of N is decreased depending on the presence or absence of a collision, or the like.

For example, in a case where, during operation, the sensing interval of Type 1 LBT in the case of transmission in continuous slots is assumed to be an interval with a duration of up to 43 µs, but the initial value of N is 3 and 52 µs is selected as the sensing interval, transmission in continuous slots is not possible. In this case, instead of transmission in continuous slots, it is possible to perform transmission when a channel for one slot is available or after sensing in a guard period of a plurality of slots. Which sensing interval to assume may be configured for each resource pool, or may be defined in advance.

Note that, the following methods are conceivable as the method for configuring the sensing interval.
- In a configuration of a resource pool, which is also referred to as (pre-)configured, the value of a guard period is configured.
- In the configuration of a resource pool, which is also referred to as (pre-)configured, the number of symbols of a PSSCH is configured to be fewer, taking the guard period into account.
- In the sidelink communication in an unlicensed band, the number of symbols of a sidelink signal (for example, PSSCH) is reduced.

In the above, an example in which an additional guard period is configured in units of symbol duration has been described, but the additional guard period may be configured in units shorter than units of symbols or in units longer than units of symbols.

As described above, by shortening the time domain of the PSSCH, it is possible to secure the sensing interval of Type 1 LBT between continuous slots, thereby securing resources for sidelink communication in continuous slots and enabling the transmission and reception of a sidelink signal. Thus, it is possible to improve the resource utilization efficiency of sidelink communication.

### [Operation Example 1-2]

In the slot to which a PSFCH is mapped, a guard period of one symbol is mapped before the PSFCH is transmitted, as illustrated in FIG. 1. In an unlicensed band, it is necessary to perform sensing even before transmitting the PSFCH.

Here, a case will be described in which Type 1 LBT is executed before the transmission of the PSFCH and before the transmission of the PSSCH in the next slot. In this case, a sensing interval similar to that in Operation Example 1-1 is required.

Accordingly, in Operation Example 1-2, the sensing interval of Type 1 LBT is secured both before the transmission of the PSFCH and before the transmission of the PSSCH in the next slot after the transmission of the PSFCH.

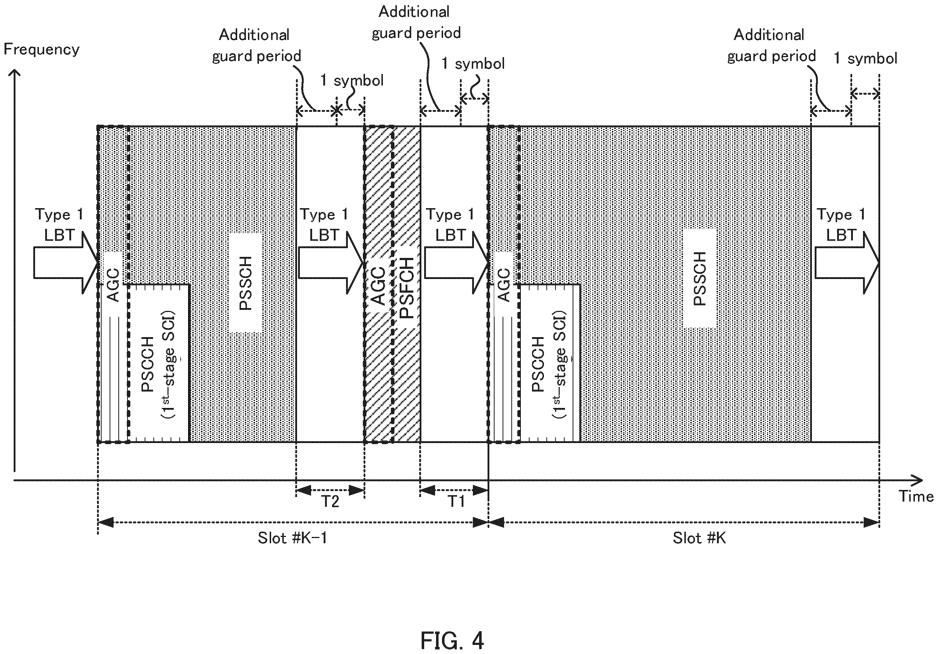

FIG. 4 illustrates an example of sidelink communication in Operation Example 1-2 of Embodiment 1. The horizontal axis in FIG. 4 represents the time axis, and the vertical axis represents the frequency axis.

As illustrated in FIG. 4, an additional guard period is added before the transmission of the PSFCH and after the transmission of the PSFCH.

For example, in a licensed band, as illustrated in Example (a) of FIG. 1, the PSFCH is mapped to the second-to-last symbol of a slot in the sidelink, and a copy of the PSFCH for AGC is mapped to the symbol immediately preceding the second-to-last symbol. In Operation Example 1-2 of Embodiment 1, the position of the symbol to which the PSFCH is mapped is moved forward on the time axis by the guard period added to the final symbol of the slot. Further, the time domain duration of the PSSCH is shortened. For example, shortening the time domain duration of the PSSCH corresponds to reducing the number of symbols of the PSSCH.

For example, interval T1 and interval T2 in FIG. 4 each have a duration including one symbol and the additional guard period. In the example of slot #K-1 (K may be an integer equal to or greater than one) in FIG. 4, the position of the symbol to which the PSFCH is mapped is moved forward on the time axis by the additional guard period in interval T1. Further, in the example of slot #K-1 in FIG. 4, the time domain duration of the PSSCH is shortened by the additional guard period in interval T2. The duration including one symbol and the additional guard period corresponds to, for example, the sensing interval of Type 1 LBT. Note that, the sensing interval of Type 1 LBT may be the same as that in Operation Example 1-1.

Note that, the position of the transmission symbol of the PSFCH (for example, the transmission symbol number in the PSFCH) may be configured for each resource pool.

Further, in an unlicensed band, the terminal may be defined as not transmitting or receiving the PSFCH. For example, in a case where the SCS is 30 kHz or 60 kHz, the number of symbols required for the guard period (the number of additional guard symbols in Table 4) increases as illustrated in Table 4. For this reason, in a case where the SCS is 30 kHz or 60 kHz, the PSFCH may not be supported. In this case, when the SCS is other than 30 kHz and other than 60 kHz, the PSFCH may be supported. Further, in a case where the SCS is 60 kHz, the PSFCH may not be supported. In this case, when the SCS is other than 60 kHz, the PSFCH may be supported. Further, in a case where the SCS is 30 kHz, PSFCH may not be supported. In this case, the PSFCH may be supported when the SCS is other than 30 kHz.

Further, in an unlicensed band, it may be defined that in a slot where the PSFCH is transmitted or received, the PSSCH is not transmitted or received. In that case, the position of the transmission symbol of the PSFCH may be defined to be frontward as compared to the position in the licensed band in order to secure the sensing interval of Type 1 LBT after the transmission or reception of PSFCH.

### [Configuration of Terminal 200]

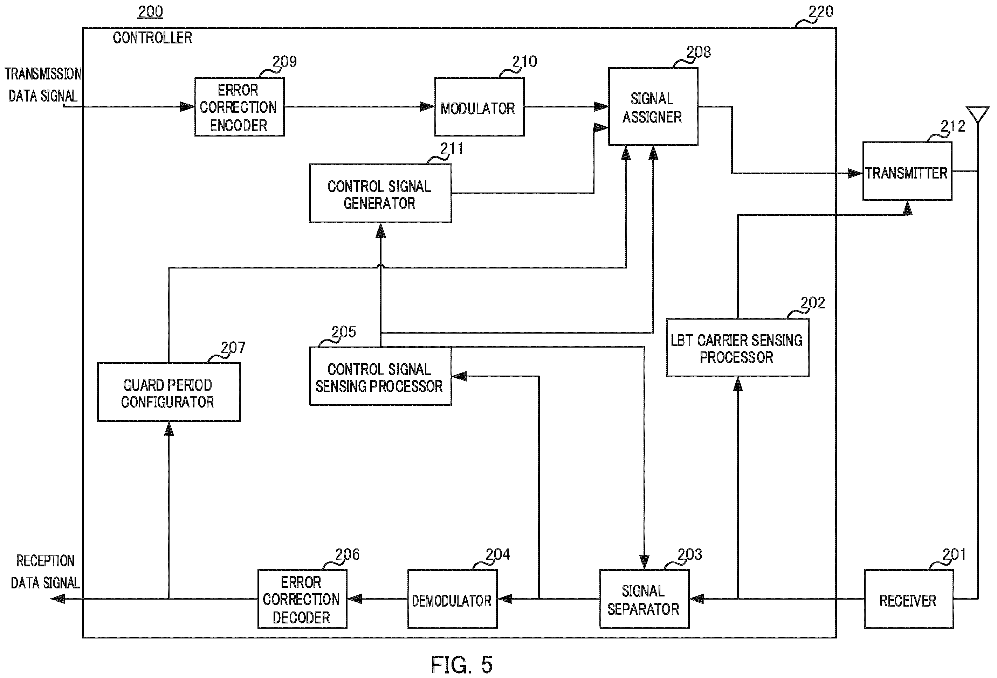

FIG. 5 is a block diagram illustrating a configuration of terminal 200 according to Embodiment 1. Terminal 200 illustrated in FIG. 5 includes receiver 201, LBT carrier sensing processor 202, signal separator 203, demodulator 204, control signal sensing processor 205, error correction decoder 206, guard period configurator 207, signal assigner 208, error correction encoder 209, modulator 210, control signal generator 211, and transmitter 212. Note that, LBT carrier sensing processor 202, signal separator 203, demodulator 204, control signal sensing processor 205, error correction decoder 206, guard period configurator 207, signal assigner 208, error correction encoder 209, modulator 210, and control signal generator 211 may be included in controller 220. Further, receiver 201 and transmitter 212 may correspond to radio transceiver 221 illustrated in FIG. 2B.

Terminal 200 may be a transmission terminal that transmits a sidelink signal in sidelink communication or a reception terminal that receives a sidelink signal in sidelink communication.

Receiver 201 receives a reception signal via an antenna, and performs reception processing such as down-conversion on the reception signal. The reception signal is, for example, a sidelink signal including PSSCH and/or PSCCH. Note that, the sidelink signal may include PSFCH. Further, the reception signal received by receiver 201 may include an idle period or may include a signal other than a sidelink signal. Receiver 201 outputs the reception signal after the reception processing to signal separator 203 and LBT carrier sensing processor 202.

LBT carrier sensing processor 202 performs carrier sense (also referred to as LBT) based on the reception signal outputted from receiver 201. LBT carrier sensing processor 202 may judge, based on the reception signal outputted from receiver 201, whether the channel state is "busy" or "idle". In other words, LBT carrier sensing processor 202 may judge whether the channel is available based on the reception signal outputted from receiver 201. LBT carrier sensing processor 202 outputs information indicating the judged channel state to transmitter 212.

Signal separator 203 outputs reception data signal among the reception signal to demodulator 204. The reception data signal is, for example, mapped to the PSSCH. Further, signal separator 203 separates the 1st stage SCI to be mapped to the PSCCH and the 2nd stage SCI to be mapped to a part of the PSSCH from the reception signal. The separated information may be referred to as control signal sensing information. Signal separator 203 outputs the control signal sensing information to control signal sensing processor 205.

Demodulator 204 performs demodulation processing on the reception signal. Demodulator 204 outputs the demodulated signal obtained through the demodulation processing to error correction decoder 206.

Error correction decoder 206 decodes the demodulated signal outputted from demodulator 204 and outputs the decoded signal as reception data. Further, error correction decoder 206 outputs a control signal of a higher layer relating to a guard period included in the reception data to guard period configurator 207.

Control signal sensing processor 205 grasps resource allocation information indicating which resources are reserved for other terminals, based on the 1st stage SCI. Then, control signal sensing processor 205 determines resource allocation to avoid overlaps with other reserved resources and indicates the determined resource allocation to signal assigner 208. Further, control signal sensing processor 205 grasps the transmission ID and the reception ID based on the 2nd stage SCI. In a case where there is resource allocation for the own terminal, control signal sensing processor 205 indicates the resource allocation for the own terminal to signal separator 203. Signal separator 203 described above separates the reception signal based on the indicated resource allocation.

Guard period configurator 207 determines the duration of the guard period based on information on the guard period defined based on the control signal of the higher layer and/or pre-configuration referred to as pre-configured. Since the duration of the guard period is configured according to the number of transmission symbols of the PSSCH, the determination of the duration of the guard period corresponds to the determination of the number of transmission symbols of the PSSCH. Guard period configurator 207 indicates the determined number of transmission symbols of the PSSCH to signal assigner 208.

Error correction encoder 209 acquires a data signal, performs error correction encoding on the data signal, and outputs the data signal subjected to the error correction encoding to modulator 210.

Modulator 210 modulates the data signal received from error correction encoder 209, and outputs the modulated signal to signal assigner 208.

Control signal generator 211 generates signals for the 1st stage SCI and the 2nd stage SCI from the control information. Control signal generator 211 inputs the signals for the 1st stage SCI and the 2nd stage SCI to signal assigner 208.

Signal assigner 208 assigns the modulated signal outputted from modulator 210 to a resource. At that time, signal assigner 208 may assign the signal to a resource while taking into account information outputted from control signal sensing processor 205. Signal assigner 208 determines the number of symbols of the PSSCH and assigns the PSSCH with the determined number of symbols to a resource according to the information outputted from guard period configurator 207. After performing the resource allocation, signal assigner 208 outputs a transmission signal to transmitter 212.

In a case where the sensing result acquired from LBT carrier sensing processor 202 indicates an idle state, transmitter 212 performs transmission processing such as up-conversion on the transmission signal, and transmits the transmission signal after the transmission processing via an antenna.

In Embodiment 1 described above, the sensing interval of Type 1 LBT is secured by adjusting the time domain duration (for example, the number of symbols of the PSSCH) of a sidelink signal (for example, PSSCH). Illustratively, in the above-described present Embodiment 1, when sidelink communication is performed in an unlicensed band, the time domain duration of the PSSCH is shortened in the slot before transmitting the resource acquired by Type 1 LBT. As described above, by adjusting the time domain duration of the PSSCH, it is possible to secure the sensing interval of Type 1 LBT, and thus, it is possible to avoid wasting resources for providing the sensing interval and to improve the resource utilization efficiency of sidelink communication.

### (Embodiment 2)

Embodiment 2 illustrates an example in which terminals that perform sidelink communication share a COT (Channel Occupancy Time) with each other and perform Type 2 LBT. Thus, by sharing a COT and performing Type 2 LBT, a PSSCH with a long symbol duration can be transmitted and received in continuous slots.

### [Operation Example 2-1]

In Operation Example 2-1, a COT is shared between terminals when sidelink transmission is performed in an unlicensed band. In sidelink communication, each terminal in the same resource pool grasps the resources reserved by other terminals and determines the resource to be transmitted by the own terminal. In a slot where each terminal can receive the PSCCH, each terminal grasps the resources reserved by other terminals by receiving the PSCCH.

Accordingly, terminals are configured to capable of grasping the duration of the COT between the terminals in a resource pool by indicating a COT duration in the PSCCH.

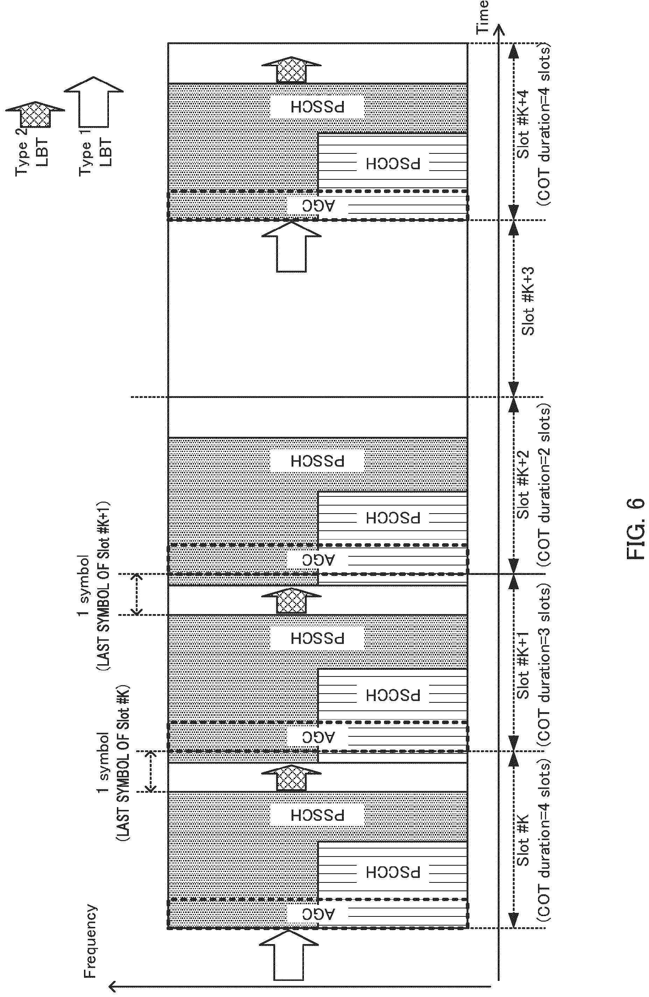

FIG. 6 illustrates a first example of sidelink communication in Operation Example 2-1 of Embodiment 2. The horizontal axis in FIG. 6 represents the time axis, and the vertical axis represents the frequency axis.

For example, as illustrated in FIG. 6, in a case where a certain terminal (hereinafter referred to as terminal A) acquires a COT with Type 1 LBT in slot #K (K may be an integer equal to or greater than zero), terminal A indicates information indicating that the COT duration is four slots, in the PSCCH to be transmitted in slot #K. The information indicating the number of slots of the COT duration may be described as information on the COT duration. The information on the COT duration is an example of information on the COT.

In slot #K, terminal B, which is a terminal other than terminal A, receives the PSCCH transmitted by terminal A and confirms that the COT duration is four slots. In a case where terminal B confirms that the COT duration is larger than one, terminal B executes Type 2 LBT from the head of the last symbol of slot #K in order to perform transmission in slot #K+1, which is the next slot.

Note that, which of Type 2A, Type 2B, and Type 2C in Type 2 LBT is used may be defined in advance or may be determined according to conditions.

As illustrated in Table 1, the sensing interval is 25 µs in the case of Type 2A, and the sensing interval is 16 µs in the case of Type 2B. For example, in Type 2A, in a case where terminal B confirms that the channel is not used during 25 µs from the head of the final symbol of slot #K, terminal B may start transmission. In this case, terminal B may start transmission from the middle of the last symbol of slot #K (for example, from the timing after 25 µs have elapsed from the head of the last symbol of slot #K), as illustrated in FIG. 6. Further, similarly, in, for example, Type 2B, when terminal B confirms that the channel is not used during 16 µs from the head of the last symbol of slot #K, terminal B may start transmission. In this case, terminal B may start transmission from the middle of the last symbol of slot #K (for example, from the timing after 16 µs have elapsed from the head of the last symbol of slot #K).

As illustrated in Table 1, in the case of Type C, sensing may not be performed. In the case of Type C, terminal B may start transmission from the head of the final symbol of slot #K. In this case, the signal that terminal B transmits in the last symbol of slot #K may be a signal with an increased CP duration, which that terminal B transmits in slot #K+1. Here, the signal with an increased CP duration to be transmitted in slot #K+1, or the processing of increasing the CP duration, may be referred to as CP (Cyclic Prefix) extension.

Terminal B subtracts one slot from the number of slots of four of the COT duration indicated in slot #K, and indicates, in the PSCCH to be transmitted in slot #K+1, information indicating that the COT duration is three slots.

In FIG. 6, terminal C, which has received the PSCCH in slot #K+1, performs transmission in slot #K+2 in the same manner as the operation of terminal B in slot #K+1, and thus, performs Type 2 LBT from the head of the last symbol of slot #K+1. In a case where terminal C confirms that the channel is not used, terminal C starts transmission from the middle of the last symbol of slot #K+1.

Terminal C further subtracts one slot from the number of slots of three of the COT duration indicated in slot #K+1, and indicates, in the PSCCH to be transmitted in slot #K+2, information indicating that the COT duration is two slots.

In the example of FIG. 6, there is no terminal transmitting in slot #K+3. For this reason, the COT is not continued in slot #K+3. In this case, the indication in slot #K indicates that the COT duration is four slots, but the actual COT duration is three slots.

Since PSCCH is not transmitted in slot #K+3, terminal D, which plans to perform transmission in slot #K+4, recognizes that the COT does not exist at the time of slot #K+3. In this case, terminal D performs Type 1 LBT and, in a case where terminal D has confirmed that the channel is not used, terminal D transmits a sidelink signal in slot #K+4.

Note that, in a case where the COT is continued in slot #K+3 (for example, in a case where a terminal that performs transmission in slot #K+3 exists), the terminal that performs transmission in slot #K+3 indicates, in the PSCCH in slot #K+3, information indicating that the COT duration is one slot. A terminal that has received the PSCCH in slot #K+3 recognizes that the COT duration is one slot, and recognizes that the COT is not continued in the next slot #K+4. In this case, the terminal that performs transmission in slot #K+4 performs Type 1 LBT in order to perform transmission in slot #K+4, acquires the COT, and perform the transmission.

As described above, when a terminal transmits information indicating a COT duration in PSCCH, a COT can be shared between different terminals. By sharing the COT, the different terminals can execute Type 2 LBT in the COT, and thus, it is possible to shorten the sensing interval and perform transmission and reception of signals assigned to resources in continuous slots. Further, since Type 2 LBT can be executed in the COT, the resource utilization efficiency can be improved without shortening the duration of the PSSCH.

Note that, in a case where the terminal performs transmission in a slot in which the COT duration is one slot (for example, slot #K+3 in FIG. 6), the time interval of the PSSCH may be shortened, and an interval in which Type 1 LBT can be performed may be provided before the next slot, as in the example described in Embodiment 1. When a description is given with FIG. 6, in a case where a certain terminal performs transmission in slot #K+3 in which the COT duration is one slot, a sensing interval for performing Type 1 LBT may be provided before slot #K+4 by shortening the time interval of the PSSCH to be transmitted in slot #K+3.

The COT duration may be determined by a terminal that acquires a COT. A terminal that acquires a COT may determine the number of slots of the COT duration. Having said that, a limitation may be imposed on the COT duration. For example, the COT duration may be limited to a value that does not exceed the interval of T_(mcot,p) defined for each Channel Access Priority Class illustrated in Table 2.

The COT duration in a case where a terminal acquires a COT may be a predefined value. For example, the COT duration in a case where a terminal acquires a COT may be configured in advance for each resource pool.

Note that, as a variation of Operation Example 2-1, in a case where the COT duration is larger than one slot, the transmission interval of the PSSCH may be terminated in the middle of the last symbol.

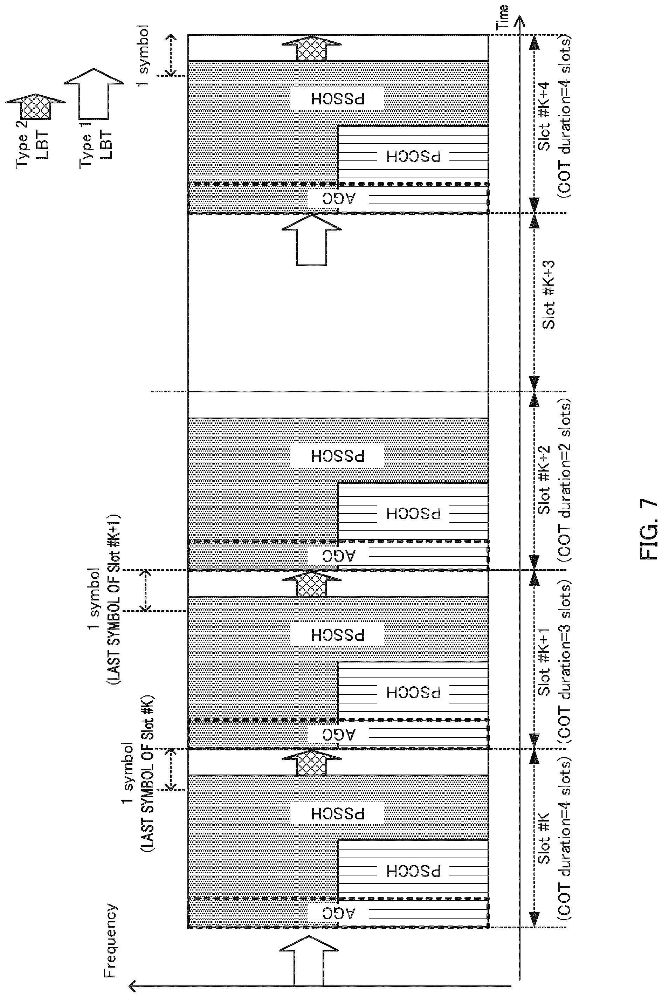

FIG. 7 illustrates an example of a resource for sidelink communication in a variation of Operation Example 2-1 in Embodiment 2. The horizontal axis of FIG. 7 represents the time axis, and the vertical axis represents the frequency axis.

For example, as illustrated in FIG. 7, in a case where terminal A acquires a COT with Type 1 LBT in slot #K, terminal A indicates, in the PSCCH, information indicating that the COT duration is four slots. Further, terminal A transmits the PSSCH up to the middle of the final symbol in slot #K. The duration of the interval in which the transmission is performed in the final symbol of slot #K may be determined based on the sensing interval of Type 2 LBT. For example, the interval in which the transmission is performed in the final symbol may have a duration obtained by subtracting the sensing interval of Type 2 LBT from the duration of one symbol.

For example, in a case where the SCS is 30 kHz and Type 2 LBT is Type 2A, terminal B, which is a terminal different from terminal A, receives the PSCCH transmitted by terminal A in slot #K and confirms that the COT duration is larger than one. In this case, terminal B performs transmission in the next slot, which is slot #K+1, and thus performs Type 2 LBT from the timing of the end of PSSCH transmission in slot #K. As described above, in slot #K, the PSSCH is transmitted up to the middle of the last symbol, and thus, the timing of the end of the PSSCH transmission may be the timing in the middle of the last symbol of the PSSCH.

### [Operation Example 2-2]

In Operation Example 2-2, an example in which the value of the COT duration (for example, the number of slots) is determined based on a common rule between terminals will be described. Illustratively, hereinafter, a case where the value of the COT duration is determined in association with a slot number will be described. By determining the value of the COT duration based on a common rule between terminals, a plurality of terminals can determine the same value of the COT duration between the terminals in a case where the plurality of terminals acquire the COT in the same slot.

When the maximum value of the COT duration is defined as k, the value of k - mod(slot number, k) may be used as the number of slots in the COT duration. Here, mod(slot number, k) represents the remainder obtained by dividing the slot number by k. The maximum value k of the COT duration is configured such that k does not exceed the interval of T_(mcot,p) defined for each Channel Access Priority Class.

For example, in a case where k = 4, the COT duration is four slots in the slot numbers 0, 4, 8, ... and is three slots in the slot numbers 1, 5, 9, ....

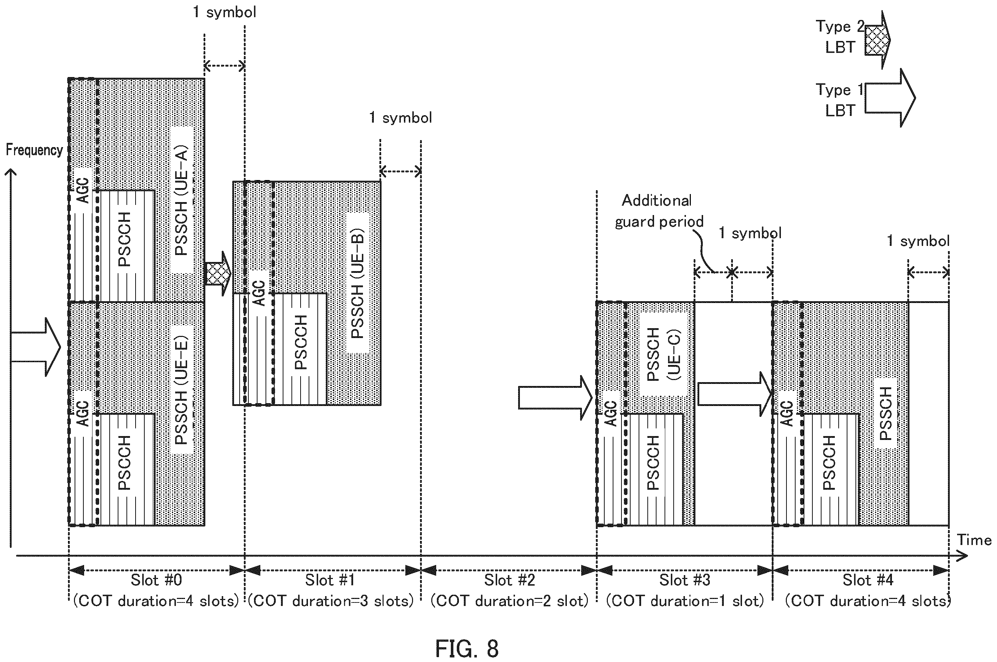

FIG. 8 illustrates an example of sidelink communication in Operation Example 2-2 of Embodiment 2. The horizontal axis in FIG. 8 represents the time axis, and the vertical axis represents the frequency axis.

As illustrated in FIG. 8, when terminal A ("UE-A" in FIG. 8) acquires a COT with Type 1 LBT in slot #0, the COT duration associated with the slot number 0 is four slots, and thus, terminal A indicates, in the PSCCH, information indicating that the COT duration is four slots. Further, similarly, when terminal E ("UE-E" in FIG. 8), which is different from terminal A, acquires a COT with Type 1 LBT in slot #0, terminal E indicates, in the PSCCH, information indicating that the COT duration is four slots.

As described above, when the value of the COT duration is determined based on a common rule between terminals, the COT duration to be indicated can have the same value for the plurality of terminals in a case where the plurality of terminals acquire the COT in resources that are different from each other.

For example, in the example of FIG. 8, terminal B ("UE-B") that performs transmission in slot #1 receives the PSCCH transmitted by terminal A or terminal E in slot #0. In the same manner as in Operation Example 2-1, terminal B performs Type 2 LBT from the head of the final symbol in slot #0. Note that, the sensing interval for performing Type 2 LBT is 25 µs in the case of Type 2A and is 16 µs in the case of Type 2B. In a case where terminal B confirms that the channel is not used during the sensing interval, terminal B starts transmission from the middle of the last symbol of slot #0. Note that, in the case of Type C, terminal B starts transmission from the head of the last symbol of slot #0.

In FIG. 8, there is no terminal that performs transmission in slot #2. Terminal C ("UE-C") that performs transmission in slot #3 attempts to receive the PSCCH in slot #2, but cannot detect the PSCCH since transmission is not performed in slot #2. In a case where terminal C cannot detect the PSCCH in slot #2, terminal C recognizes that there has been no transmission in slot #2 and performs Type 1 LBT in a rear part of slot #2 in order to acquire COT in slot #3.

In a case where terminal C performs Type 1 LBT and can acquires the COT, terminal C performs transmission in slot #3. At this time, the COT duration is calculated based on k - mod(slot number, k). In a case where k = 4, the slot number is three, and thus, the COT duration is one slot. In slot #3 where the COT duration is one slot, the time domain of the PSSCH may be shortened as in Embodiment 1 to create a sensing interval for performing Type 1 LBT before the next slot #4. In this case, the operation of the terminal in slot #4 may be the same as the operation in slot #0.

Note that, in the example described above, an example in which information indicating the COT duration is indicated in the PSCCH has been described, but the present disclosure is not limited to this. For example, in Operation Example 2-2, instead of explicitly indicating the COT duration in the PSSCH, the calculation method of the COT duration is commonly recognized between terminals, and each terminal may calculate the COT duration. When each terminal calculates the COT duration, the information indicating the COT duration is not indicated to the terminals, and thus, it is possible to reduce the number of bits used for indication.

Note that, in a case where the COT duration is larger than one slot in Operation Example 2-2 in the same manner as in the variation of Operation Example 2-1, the transmission interval of PSSCH may be up to the middle of the last symbol of the slot. In this case, the head of the next slot may be the start of the slot.

### [Operation Example 2-3]

In Operation Example 2-3, the CP extension in which transmission is started from a symbol before the starting symbol of a slot in Operation Example 2-1 or 2-2 is also applied to a signal to be transmitted after performing Type 1 LBT. When the CP extension is applied to a signal to be transmitted after performing Type 1 LBT and the duration of the CP extension is longer than that for a signal to be transmitted by another terminal, transmission can be started at a timing earlier than the timing at which another terminal starts transmission. That is, it is possible to start transmission with priority over the transmission of a signal transmitted by another terminal.

The duration of the CP extension is considered as follows.
(1) In a case where a terminal performs transmission after performing Type 1 LBT, the terminal shortens the duration of the CP extension as compared to a case where a terminal performs transmission after performing Type 2 LBT. Thus, transmission by the terminal that performs the transmission after performing Type 2 LBT can be prioritized over transmission by the terminal that performs the transmission after performing Type 1 LBT. For example, in a case where terminal X, which has received the PSCCH in the slot immediately preceding the current slot and recognizes that the COT duration is continued, performs Type 2 LBT, transmission by terminal X can be prioritized over transmission by terminal Y, which does not recognize that the COT duration is continued.
(2) In a case where transmission is performed after performing Type 1 LBT, and a slot in which transmission is performed is preceded by a slot in which the resource for the slot in which the transmission is performed is reserved, the duration of the CP extension may be longer than in a case where the resource has not been specified in advance. For example, in a case where a resource is specified time resource assignment or a resource reservation period in the SCI format transmitted in the PSCCH, the duration of the CP extension may be longer than in a case where the resource has not been specified in advance. Thus, it is possible to prioritize transmission by a terminal that has reserved a resource in advance over transmission by a terminal that has reserved a resource in advance.
(3) In a case where transmission is performed after Type 1 LBT is performed and transmission is performed using a transmission method called random selection, the duration of the CP extension may be shorter than in a case where transmission is performed using a transmission method that is not the random selection. The transmission method called the random selection is a transmission method that is performed in a case where the PSCCH has not been received (or detected) or a part of the PSCCH has not been received, and in a case where sensing has been performed but no resource available for transmission is found. In this manner, transmission using a transmission that is not the random selection can be prioritized over transmission using the transmission method of the random selection.
   Note that, in the case of the random selection, the CP extension may not be performed. Further, in a case where PSCCH sensing is not performed, the CP extension may not be performed. By not performing the CP extension, a terminal that has not received the PSCCH can confirm through the sensing of Type 1 LBT that there is no transmission from another terminal and can perform transmission, and thus, it is possible to reduce the collision probability.
(4) In a case where transmission is performed after performing Type 1 LBT, the duration of the CP extension may be configured according to the priority of the transmission. For example, when the determination is made based on the priority included in the SCI format transmitted by the PSCCH, the priority is higher as the value of the priority becomes smaller, and the duration of the CP extension is increased as the priority becomes higher. By increasing the duration of the CP extension as the priority becomes higher, it is possible to prioritize transmission by a terminal with a low value of the priority (that is, high priority).

### [Configuration of Terminal 200a]

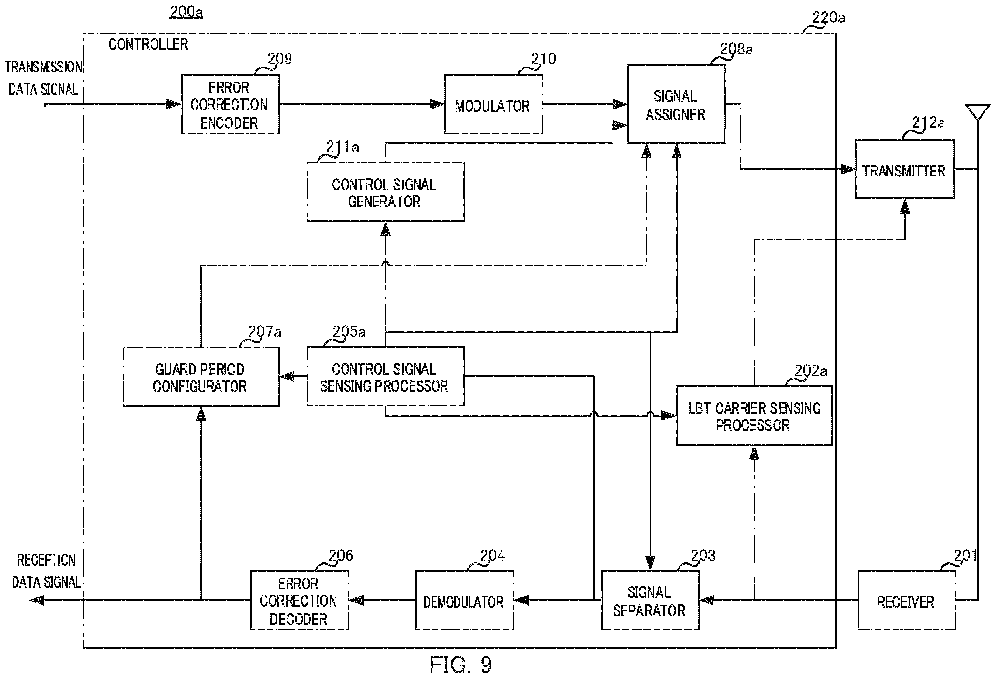

FIG. 9 is a block diagram illustrating a configuration of terminal 200a according to Embodiment 2. Note that, in FIG. 9, the same configurations as those in FIG. 5 may be denoted by the same reference signs, and description thereof may be omitted. LBT carrier sensing processor 202a, signal separator 203, demodulator 204, control signal sensing processor 205a, error correction decoder 206, guard period configurator 207a, signal assigner 208a, error correction encoder 209, modulator 210, and control signal generator 211a may be included in controller 220a. Controller 220a may be considered to be another example of controller 220 illustrated in FIG. 5. Further, receiver 201 and transmitter 212a may correspond to radio transceiver 221 illustrated in FIG. 2B.

In sidelink communication, terminal 200a may be a transmission terminal that transmits a sidelink signal or a reception terminal that receives a sidelink signal. Terminal 200a may be considered to be another example of terminal 200 illustrated in FIG. 5. Hereinafter, differences between terminal 200 illustrated in FIG. 5 and terminal 200a will be described.

LBT carrier sensing processor 202a performs carrier sense (also referred to as LBT) based on the reception signal outputted from receiver 201. LBT carrier sensing processor 202a determines, based on information on the COT (for example, information on the COT duration) outputted from control signal sensing processor 205a, whether Type 1 LBT or Type 2 LBT is performed. Further, LBT carrier sensing processor 202a may determine the timing for starting LBT based on information such as priority, which is not illustrated. For example, LBT carrier sensing processor 202a may judge, based on the reception signal outputted from receiver 201, whether the channel state is "busy" or "idle" (in other words, whether the channel is available). LBT carrier sensing processor 202a outputs information indicating the judged channel state to the transmitter.

Control signal sensing processor 205a grasps resource allocation information indicating which resources are reserved for other terminals, based on the 1st stage SCI. Then, control signal sensing processor 205a determines resource allocation to avoid overlaps with other reserved resources and indicates the determined resource allocation to signal assigner 208a. Further, control signal sensing processor 205a outputs information on the COT (for example, information on the COT duration) to LBT carrier sensing processor 202a, signal assigner 208a, and control signal generator 211a. Control signal sensing processor 205a grasps the transmission ID and the reception ID based on the 2nd stage SCI. In a case where there is resource allocation for the own terminal, control signal sensing processor 205a indicates the resource allocation for the own terminal to signal separator 203. Signal separator 203 separates the reception signal based on the indicated resource allocation.

Guard period configurator 207a determines the number of PSSCH transmission symbols based on information on the guard period defined based on the control signal of the higher layer and/or pre-configuration referred to as pre-configured, and indicates the determined number of PSSCH transmission symbols to signal assigner 208a.

Control signal generator 211a generates signals for the 1st stage SCI and the 2nd stage SCI from the control information. Control signal generator 211a outputs the signals for the 1st stage SCI and the 2nd stage SCI to signal assigner 208a. In a case where terminal 200a acquires the COT, control signal generator 211a determines the COT duration. Further, control signal generator 211a acquires information on the COT duration of the slot immediately preceding the current slot from control signal sensing processor 205a. In a case where the COT duration is equal to or greater than two, control signal generator 211a configures the COT duration to a number obtained by subtracting one from the COT duration.

Signal assigner 208a assigns the modulated signal outputted from modulator 210 to a resource. At that time, signal assigner 208a may assign the signal to a resource while taking into account information outputted from control signal sensing processor 205a. Signal assigner 208a acquires information on the COT (for example, information on the COT duration) from control signal sensing processor 205a. In a case where the acquired information indicates that the COT duration of the slot immediately preceding the current slot is equal to or greater than two, signal assigner 208a determines the number of PSSCH symbols to the PSSCH in the slot according to the information outputted from guard period configurator 207a, and assigns the PSSCH with the determined number of symbols to a resource. After performing the resource allocation, signal assigner 208a outputs a transmission signal to transmitter 212a.

In a case where the sensing result acquired from LBT carrier sensing processor 202a indicates an idle state, Transmitter 212a performs transmission processing such as up-conversion on the transmission signal, and transmits the transmission signal after the transmission processing via an antenna. At that time, transmitter 212a performs the CP extension and starts transmission from the timing at which LBT is completed.

In Embodiment 2 described above, information on the COT is shared between a plurality of terminals (for example, terminals in a resource pool), and the LBT to be performed is determined based on the information on the COT. For example, when the information on the COT indicates that the COT duration is equal to or longer than two slots in the slot immediately preceding the current slot, the terminal performs Type 2 LBT. Thus, by sharing information on the COT, it is possible to transmit a sidelink signal, with continuous slots as transmission in the same COT, and thus, it is possible to increase the time interval of the PSSCH and to improve the resource utilization efficiency of sidelink communication.

Further, in Embodiment 2, it is possible to satisfy the conditions for performing Type 2 LBT and to secure the sensing interval of Type 2 LBT by adjusting the time domain duration of the sidelink signal (for example, the duration of the CP).

Note that, it has been described that the information indicating the COT duration is transmitted in the PSCCH, but the information indicating the COT duration may be added to the 2nd stage SCI and transmitted in the PSSCH. Further, the information indicating the COT duration may be transmitted in another new channel.

### (Embodiment 3)

In Embodiment 3, a case will be described in which the terminal transmits PSCCH and/or PSSCH from the middle of a slot when the terminal has performed the LBT, but cannot acquire the transmission right and cannot transmit the PSCCH and/or the PSSCH from the head of the slot due to the channel being used (due to a busy state). According to Embodiment 3, even in a case where the transmission right is not acquired at the head of the slot, it is possible to perform transmission from the middle of the slot.

Note that, the configuration of the terminal according to Embodiment 3 may be the same as the configuration of terminal 200a illustrated in FIG. 9 or may be the same as the configuration of terminal 200 illustrated in FIG. 5. Alternatively, the configuration of the terminal according to Embodiment 3 may be the configuration of terminal 200a illustrated in FIG. 9 or terminal 200 illustrated in FIG. 5, with an added function for performing the operation example to be described below.

### [Operation Example 3-1]

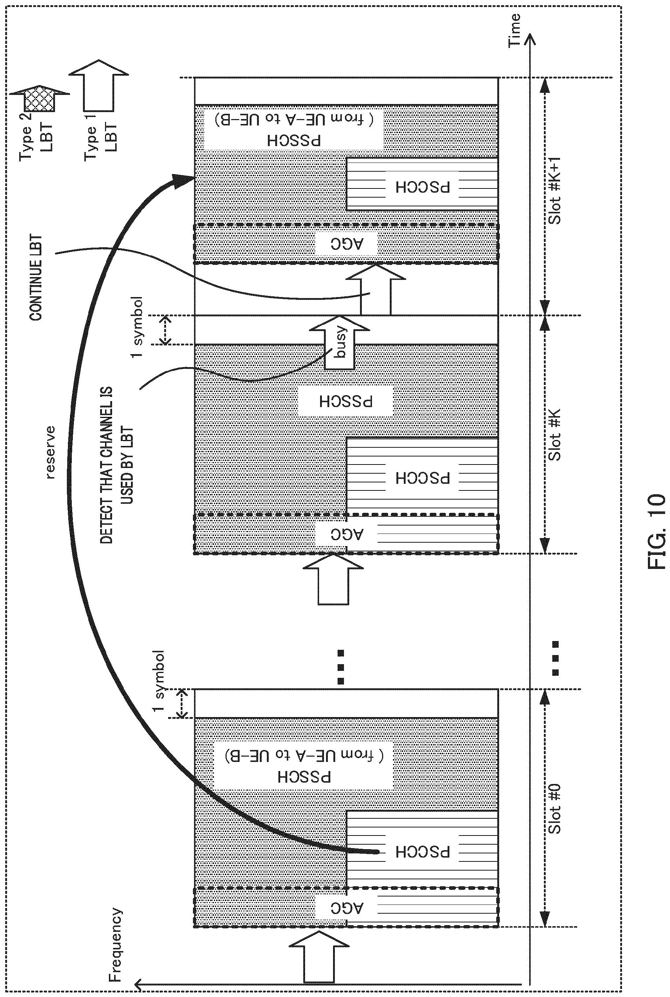

FIG. 10 illustrates an example of sidelink communication in Operation Example 3-1 of Embodiment 3. The horizontal axis in FIG. 10 represents the time axis, and the vertical axis represents the frequency axis.

In slot #0, terminal A performs transmission to terminal B and reserves, in the PSCCH of slot #0, a resource in slot #K+1 which is a slot rearward from slot #0.

In the example of FIG. 10, however, terminal A detects that the channel is used by the LBT that has been performed by terminal A to transmit a signal (for example, a resource) from the head of slot #K+1. In this case, despite the reservation of the resource in slot #K+1, transmission cannot be performed from the head of slot #K+1.

In Operation Example 3-1, terminal A continues the LBT in slot #K+1 as illustrated in FIG. 10. Then, in a case where the continued LBT confirms that the channel is not used for a certain period of time, terminal A starts transmission from a symbol in the middle of slot #K+1.

According to Operation Example 3-1, transmission can be started from a symbol other than the head of the slot, and thus, resources can be utilized effectively.

Note that, in slot #0, terminal B recognizes that a resource for transmission from terminal A to terminal B is reserved in slot #K+1, and attempts to detect, from symbols in a front part of slot #K+1 (for example, the first symbol in slot #K+1), the PSCCH to be mapped to a symbol in the front part of slot #K+1. However, as described above, since terminal A cannot perform transmission from the head of slot #K+1, terminal B cannot detect the PSCCH in the symbols in the front part of slot #K+1.

In Operation Example 3-1, when terminal B cannot detect the PSCCH in the symbols in the front part of slot #K+1, terminal B attempts to detect the PSCCH to be mapped to the position of a second candidate (for example, a symbol of a second candidate). The symbol of the second candidate may be predetermined. For example, the symbol of the second candidate may be predetermined, such as symbol #4 or symbol #5. In a case where terminal B can detect the PSCCH with the second candidate, terminal B receives the PSSCH based on the detected PSCCH.

In a case where terminal B cannot receive the PSCCH with the second candidate, terminal B recognizes that there has been no transmission of the PSCCH and/or PSSCH for terminal B from terminal A in slot #K+1.

In Operation Example 3-1, a terminal may detect the second candidate in, for example, a resource that has been reserved in advance (in the example of FIG. 9, slot #K+1), and may not detect the second candidate in a resource that has not been reserved. By performing such detection, the terminal can detect PSCCHs to be mapped to symbols different from each other in a slot in a resource with a high possibility of including a signal for the own terminal, without increasing the number of times for the terminal to detect PSCCHs. Note that, a resource with a high possibility of including a signal for the own terminal is, for example, a resource that is reserved for a signal for the own terminal. Further, the symbols different from each other in a slot correspond to, for example, a symbol in a front part of the slot and a symbol of the second candidate.

Note that, in Operation Example 3-1, candidates for the PSCCH are up to the second candidate, but the candidates may be increased to a third candidate, a fourth candidate, and so on.

Further, the transmission start position of the PSSCH in a case where the PSCCH can be detected with the second candidate may be predefined, or information (for example, a symbol number) indicating the transmission start position of PSSCH may be indicates with bits of PSCCH.

Note that, the PSCCH to be mapped to a candidate other than the first candidate may be defined not to be able to reserve a resource rearward from the resource in which the PSCCH has been transmitted. According to this definition, it is possible to prevent a resource, which is rearward from a resource in which the PSCCH has been transmitted, from being reserved in the PSCCH that the terminal does not detect.

Note that, FIG. 10 illustrates an example in which the resource of the signal to be transmitted in slot #K is a sidelink resource of NR, but the present disclosure is not limited thereto. For example, the signal transmitted in slot #K in the example of FIG. 10 may be another signal of WiFi or the like.

Note that, FIG. 10 illustrates an example in which the LBT is Type 1 LBT, but the present disclosure is not limited thereto. For example, the same operations as those in the above operation example may be performed by Type 2 LBT.

In the above, in Embodiment 3, when the terminal cannot acquire the transmission right at the head of the slot for which the terminal has made a reservation in advance, the terminal transmits a sidelink signal from a symbol rearward from the head of the slot. Thus, it is possible to improve the resource utilization efficiency since a resource reserved in advance can be effectively utilized. Further, in Embodiment 3, when a resource has been reserved in advance, the PSCCH is transmitted from the second candidate position, and thus, a terminal that is the reception target for the reserved resource can detect the PSCCH efficiently. Further, since a terminal that is not the reception target for the reserved resource does not detect the PSCCH, it is possible to prevent an increase in the detection frequency of terminals that are not the reception target.

### (Embodiment 4)

In Embodiment 4, the terminal transmits the PSFCH in a slot in which the PSCCH has been detected, or transmits the PSFCH, in a slot in which the PSCCH has been transmitted, after performing Type 2 LBT, and transmits the PSFCH, in a slot in which the PSCCH has not been detected or in a slot in which the PSCCH has not been transmitted, after performing Type 1 LBT. According to Embodiment 4, in a slot in which the PSCCH and/or PSSCH is/are transmitted, the PSCCH and/or PSSCH and the PSFCH can be transmitted in the same COT, thereby improving resource utilization efficiency.

Note that, the configuration of the terminal according to Embodiment 4 may be the same as the configuration of terminal 200a illustrated in FIG. 9 or may be the same as the configuration of terminal 200 illustrated in FIG. 5. Alternatively, the configuration of the terminal according to Embodiment 4 may be the configuration of terminal 200a illustrated in FIG. 9 or terminal 200 illustrated in FIG. 5, with the addition of a function for performing the operation example to be described below.

### [Operation Example 4-1]

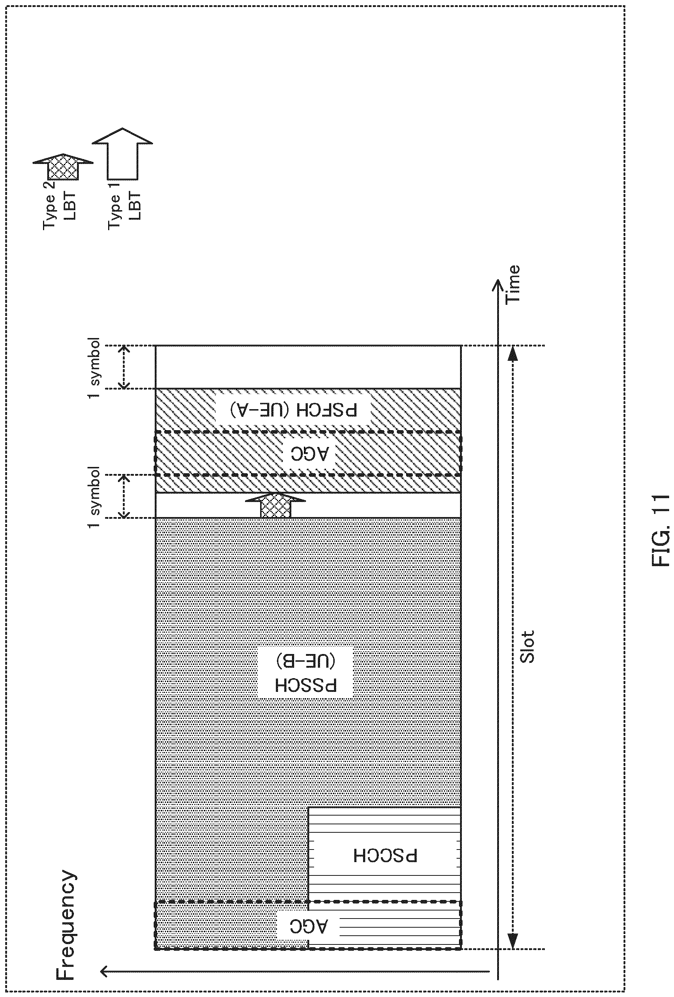

FIG. 11 illustrates the first example of sidelink communication in Operation Example 4-1 of Embodiment 4. The horizontal axis in FIG. 11 represents the time axis, and the vertical axis represents the frequency axis.

In FIG. 11, terminal A transmits the PSFCH in a rear part of the slot in which terminal B transmits the PSCCH and/or PSSCH.

Terminal A detects the PSCCH transmitted by terminal B and recognizes that the PSCCH and/or PSSCH exist(s) in the slot. In a case where terminal A recognizes that the PSCCH and/or PSSCH exist(s) in the slot, terminal A performs Type 2 LBT from the head of the symbol next to the last symbol of the PSSCH. In a case where terminal A recognizes that the channel is not used in Type 2 LBT, terminal A starts transmitting the PSFCH immediately after the end of Type 2 LBT. In a case where terminal A starts transmitting the PSFCH immediately after the end of Type 2 LBT, terminal A performs the CP extension, increases the CP duration of a symbol in which a copy of the PSFCH is transmitted for AGC (hereinafter referred to as "AGC symbol"), and starts transmission from a symbol before the AGC symbol.

Thus, by transmitting the PSFCH, it can be assumed that the PSCCH and/or PSSCH transmitted by terminal B and the PSFCH transmitted by terminal A are transmitted in the same COT.

Note that, since the PSFCH can be transmitted by a plurality of terminals by multiplexing, there is a possibility that terminals other than terminal A also transmit the PSFCH simultaneously. However, by performing Type 2 LBT with a sensing interval of the same duration among a plurality of terminals, a plurality of terminals can start transmission simultaneously, thereby enabling the multiplexing.

Note that, in a case where terminal A is a terminal that receives the PSCCH and/or PSSCH transmitted by terminal B, terminal A needs to switch from reception to transmission before transmitting the PSFCH. In a case where the time for switching from reception to transmission is not enough and terminal A prioritizes the transmission of the PSFCH over the reception of the PSSCH, terminal A may stop receiving the PSSCH in the middle and switch to transmitting the PSFCH. Note that, in a case where the time for switching from reception to transmission is not enough and the reception of the PSSCH is prioritized over the transmission of the PSFCH, terminal A may not transmit the PSFCH.

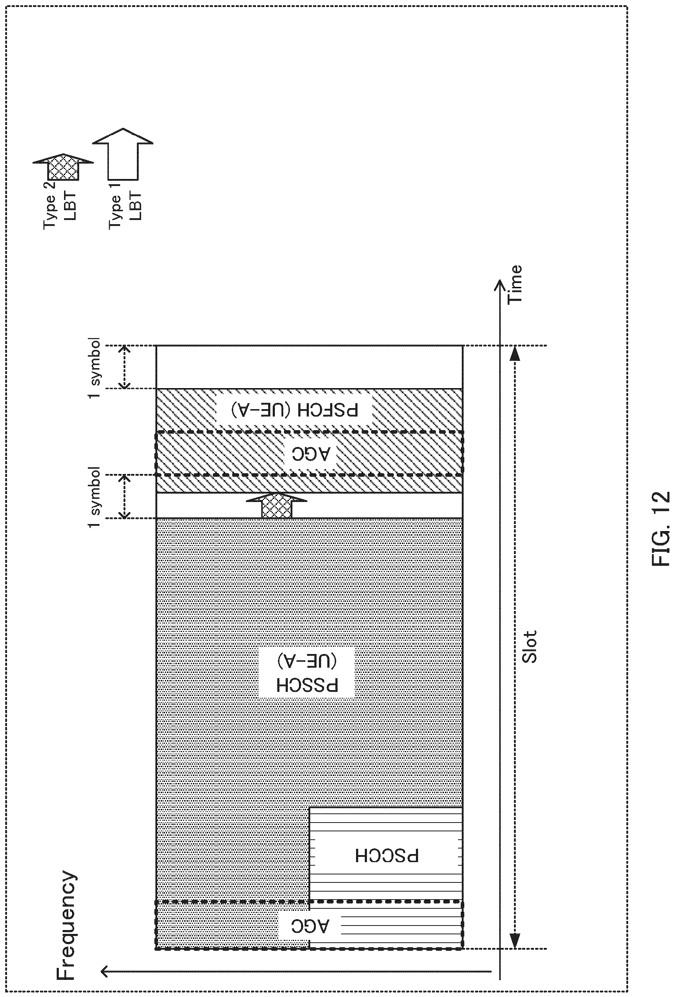

FIG. 12 illustrates a second example of sidelink communication in Operation Example 4-1 of Embodiment 4. The horizontal axis in FIG. 12 represents the time axis, and the vertical axis represents the frequency axis.

In FIG. 12, terminal A transmits the PSFCH in a rear part of the slot in which terminal A transmits the PSCCH and/or PSSCH, where terminal A is the same terminal that transmits the PSCCH and/or PSSCH.

In this case, terminal A operates at the same timing as in the example illustrated in FIG. 11. For example, terminal A performs Type 2 LBT from the head of the symbol next to the last symbol of the PSSCH. Then, in a case where terminal A recognizes that the channel is not used by Type 2 LBT, terminal A starts transmitting the PSFCH immediately after the end of Type 2 LBT. In a case where terminal A starts transmitting the PSFCH immediately after the end of Type 2 LBT, terminal A performs the CP extension, increases the CP duration of a symbol in which a copy of PSFCH is transmitted for AGC (hereinafter referred to as "AGC symbol"), and starts transmission from a symbol before the AGC symbol.

Even when a terminal that transmits the PSCCH and/or PSSCH and a terminal that transmits the PSFCH are the same by transmitting the PSFCH as exemplified in FIG. 12, providing a sensing interval for performing Type 2 LBT makes it possible to secure, in a case where the PSFCH transmitted by another terminal different from the terminal that has transmitted the PSCCH and/or PSSCH is multiplexed, the sensing interval in which the other terminal performs Type 2 LBT.

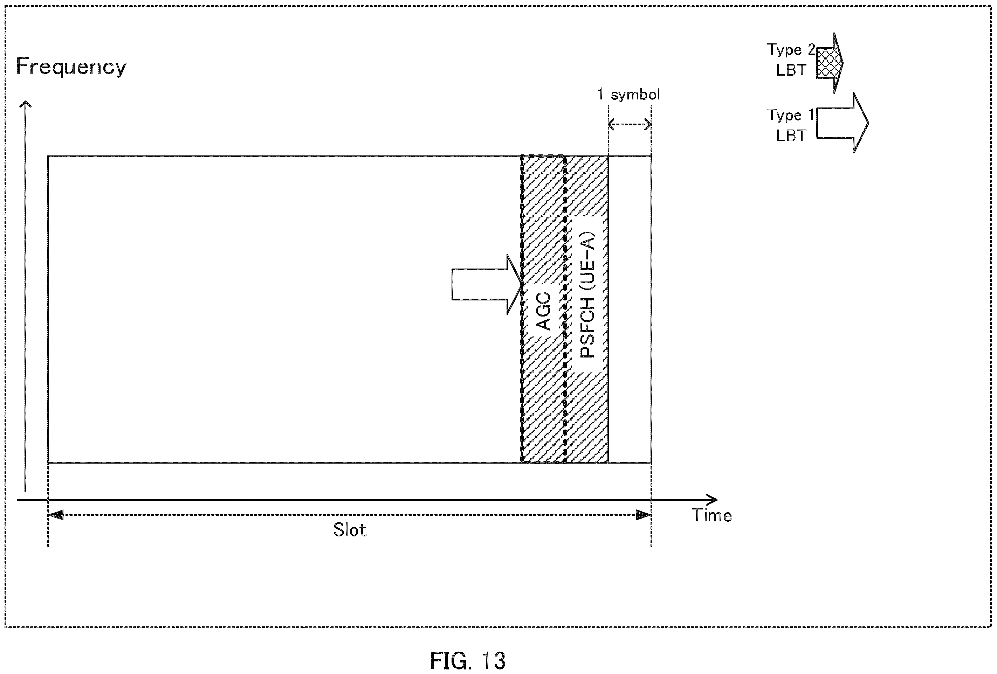

FIG. 13 illustrates a third example of sidelink communication in Operation Example 4-1 of Embodiment 4. The horizontal axis in FIG. 13 represents the time axis, and the vertical axis represents the frequency axis.

FIG. 13 illustrates a case where terminal A has not detected the PSCCH in a slot. In this case, terminal A, which has not detected the PSCCH in the slot, performs Type 1 LBT before transmitting the PSFCH and starts transmitting the PSFCH. Note that, in this case, the CP extension may not be performed, unlike in the examples in FIGS. 11 and 12.

Note that, the starting position of the AGC in the figure may be the position from which the transmission of the PSFCH starts.

In Embodiment 4 described above, the terminal transmits, in a slot in which the PSCCH has been detected or in a slot in which the PSCCH has been transmitted, the PSFCH after performing Type 2 LBT, and transmits, in a slot in which the PSCCH has not been detected or in a slot in which the PSCCH has not been transmitted, the PSFCH after performing Type 1 LBT. According to Embodiment 4, in a slot in which the PSCCH and/or PSSCH is/are transmitted, the PSCCH and/or PSSCH and the PSFCH can be transmitted in the same COT, and thus, it is possible to improve the resource utilization efficiency.

### [Variation]

Note that, the operation examples of the embodiments described above may be used in combination.

Note that, terminals that perform transmission and/or reception in the sidelink include a terminal that performs transmission and does not perform reception in the sidelink, a terminal that performs reception and does not perform transmission in the sidelink, and a terminal that performs both transmission and reception in the sidelink.

Note that, when a configuration relating to the sidelink is configured in advance, the configuration method may be configured in advance in specifications or may be configured in advance in a subscriber identity module (SIM). Alternatively, the configuration relating to the sidelink may be configured in an application layer called pre-configured, in a higher layer such as a system information block (SIB) called configured and/or another radio resource control (RRC), or in a medium access control (MAC).

Note that, each of the embodiments described above illustrates the case of sidelink communication, but the present disclosure is not limited thereto. For example, in each embodiment described above, the PSCCH may be replaced with the PDCCH, the PSSCH may be replaced with the PDSCH or the PUSCH, the PSFCH may be replaced with the PUCCH, and the PSBCH may be replaced with the PBCH, and the present disclosure may be applied to communication between the base station and the terminal.

Note that, each of the embodiments described above may be applied to Mode 2 and may not be applied to Mode 1, or may be applied to both Mode 1 and Mode 2, or may be applied to Mode 1 and may not be applied to Mode 2. Further, in the operation examples in the embodiments described above, an operation example to which Mode 1 is applied and an operation example to which Mode 2 is applied may be the same or different. For example, there may be an operation example that is applied to Mode2 and is not applied to Mode1.

Further, when each of the embodiments described above is applied to Mode 1, which of Type 2A, 2B, and 2C in Type 2 LBT is selected may be instructed by the base station in a licensed band.

Further, in the embodiments described above, operation examples in an unlicensed band have been indicated, but the frequency band of an unlicensed band may vary from country to country or may vary for each region. The frequency band of an unlicensed band includes, illustratively, the 5 GHz band (5150 MHz - 5925 MHz), the 6 GHz band (5925 MHz - 7125 MHz), and 52.6 GHz to 71 GHz.

The guard symbol may also be called a gap symbol.

Note that, the usability of each of the above-described embodiments or each of the operation examples may be changed according to the SCS.

Note that, Type 1 LBT and Type 2 LBT may be called by another names in sidelink communication.

The SCI format to be transmitted in the PSCCH may be SCI format 1-A or a newly added SCI format.

Note that, the above-described embodiments may be applied to S-PSS/SSS/PSBCH.

Note that, the resource allocation for sidelink communication illustrated in each of the embodiments described above is an example, and the present disclosure is not limited thereto. For example, signals, channels, idle periods, or the like that are not illustrated may be included in resources for the sidelink communication. Further, the widths of signals in the time direction and frequency direction illustrated in the drawings are not limited to the illustrated examples. Further, the size of a slot, the size of a resource, the size of a channel, the size of a signal, and the like are not limited to the examples described above. Further, the value of the SCS, the sensing interval of the LBT, and the like are not limited to those in the examples described above.

Further, each of the embodiments described above has exemplified a case in which the duration of a sidelink signal is adjusted by increasing the CP duration of the sidelink signal by the CP extension, but the present disclosure is not limited thereto. Instead of increasing the CP duration, the duration may be adjusted by adding a known signal.

Further, in each of the embodiments described above, the confirmation of availability of the channel may be replaced with an expression such as sensing (or monitoring) of availability of the channel. Further, in this case, the term "channel" may be replaced with other terms such as "carrier" or "resource."

Further, the indication method of control information from base station 100 to terminal 200 is not limited to the example described above, and the control information may be indicated (or broadcast, instructed, configured) by at least one of system information such as MIB and SIB, RRC control information, MAC control information, and downlink control information (DCI), may be configured in advance to terminal 200, and/or may be predefined in specifications.

The base station may be referred to as a gNodeB or a gNB. Further, the terminal may be referred to as UE.

The time resource unit such as a slot may be replaced with another unit such as a system frame, a time slot, a minislot, a frame, a subframe, a block, or the like.

Further, any term ending with a suffix, such as "-er" "-or" or "-ar", in the embodiments described above may be replaced with another term, such as "circuitry," "device," "unit," or "module."

Note that the terms "interpret," "identify," "determine," "judge," "decide," "calculate," "grasp," "recognize," "confirm," or "understand" may be used interchangeably.

### (Complement)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments. Alternatively, the capability information may include information elements that indicate whether terminal 200 supports a combination of any two or more of the functions, operations, or pieces of processing that have been described in the above-mentioned embodiments.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control sidelink communication between terminals 200 based on the capability information received from terminal 200.

Note that in a case where terminal 200 does not entirely support the functions, operations, or pieces of processing described in the above-mentioned embodiments, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

### (Control Signal)

In the present disclosure, the downlink control signal (or downlink control information) according to an exemplary embodiment of the present disclosure may be, for example, a signal (or information) transmitted in a physical downlink control channel (PDCCH) in a physical layer or may be a signal (or information) transmitted in a medium access control control element (MAC CE) or a radio resource control (RRC) in a higher layer. Further, the signal (or information) is not limited to that indicated by the downlink control signal, but may be predefined in specifications (or standards) or may be configured in advance to the base station and the terminal.

In the present disclosure, the uplink control signal (or uplink control information) according to an exemplary embodiment of the present disclosure may be, for example, a signal (or information) transmitted in a PUCCH in the physical layer or may be a signal (or information) transmitted in the MAC CE or RRC in the higher layer. Further, the signal (or information) is not limited to that indicated by the uplink control signal, but may be predefined in specifications (or standards) or may be configured in advance to the base station and the terminal. Further, the uplink control signal may be replaced with, for example, uplink control information (UCI), 1st stage sidelink control information (SCI) or 2nd stage SCI.

### (Base Station)

In an exemplary embodiment of the present disclosure, the base station may be, for example, a transmission reception point (TRP), a clusterhead, an access point, a remote radio head (RRH), an eNodeB (eNB), a gNodeB (gNB), a base station (BS), a base transceiver station (BTS), a base unit, a gateway, or the like. Further, in sidelink communication, the terminal may play a role of the base station. Furthermore, instead of the base station, a relay apparatus that relays communication between a higher node and a terminal may be used. Moreover, a roadside device may be used.

### (Uplink/Downlink/Sidelink)

An exemplary embodiment of the present disclosure may be applied to, for example, any of the uplink, downlink, and sidelink. An exemplary embodiment of the present disclosure may be applied to, for example, a Physical Uplink Shared Channel (PUSCH), a Physical Uplink Control Channel (PUCCH), and a Physical Random Access Channel (PRACH) in the uplink, or a Physical Downlink Shared Channel (PDSCH), a PDCCH, and a Physical Broadcast Channel (PBCH) in the downlink, or a Physical Sidelink Shared Channel (PSSCH), a Physical Sidelink Control Channel (PSCCH), and a Physical Sidelink Broadcast Channel (PSBCH) in the sidelink.

Note that, the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a sidelink control channel and a sidelink data channel, respectively. Further, the PBCH and the PSBCH are examples of a broadcast channel, and the PRACH is an example of a random access channel.

### (Data Channel/Control Channel)

An exemplary embodiment of the present disclosure may be applied to, for example, any of a data channel and a control channel. For example, a channel in an exemplary embodiment of the present disclosure may be replaced with any of a PDSCH, a PUSCH, and a PSSCH for the data channel, or a PDCCH, a PUCCH, a PBCH, a PSCCH, and a PSBCH for the control channel.

### (Reference Signal)

In an exemplary embodiment of the present disclosure, the reference signals are, for example, signals known to both the base station and the mobile station and each reference signal may be referred to as a reference signal (RS) or sometimes a pilot signal. Each reference signal may be any of a Demodulation Reference Signal (DMRS), a Channel State Information-Reference Signal (CSI-RS), a Tracking Reference Signal (TRS), a Phase Tracking Reference Signal (PTRS), a Cell-Specific Reference Signal (CRS), or a Sounding Reference Signal (SRS).

### (Time Interval)

In an exemplary embodiment of the present disclosure, time resource units are not limited to one or a combination of slots and symbols, and may be time resource units, such as frames, superframes, subframes, slots, time slots, subslots, minislots, or symbols, orthogonal frequency division multiplexing (OFDM) symbols, single carrier-frequency division multiplexing (SC-FDMA) symbols, or other time resource units. The number of symbols included in one slot is not limited to any number of symbols exemplified in the embodiments described above, and may be other numbers of symbols.

### (Frequency Band)

An exemplary embodiment of the present disclosure may be applied to any of a licensed band and an unlicensed band.

### (Communication)

An exemplary embodiment of the present disclosure may be applied to any of communication between a base station and a terminal (Uu-link communication), communication between a terminal and a terminal (sidelink communication), and Vehicle to Everything (V2X) communication. For example, a channel in an exemplary embodiment of the present disclosure may be replaced with any of a PSCCH, a PSSCH, a Physical Sidelink Feedback Channel (PSFCH), a PSBCH, a PDCCH, a PUCCH, a PDSCH, a PUSCH, and a PBCH.

Further, an exemplary embodiment of the present disclosure may be applied to any of a terrestrial network or a non-terrestrial network (NTN) using a satellite or a high altitude pseudo satellite (HAPS). In addition, an exemplary embodiment of the present disclosure may be applied to a terrestrial network having a large transmission delay compared to a symbol duration or a slot duration, such as a network with a large cell size, and/or an ultra-wideband transmission network.

### (Antenna Port)

In an exemplary embodiment of the present disclosure, the antenna port refers to a logical antenna (antenna group) configured of one or a plurality of physical antennae. For example, the antenna port does not necessarily refer to one physical antenna and may refer to an array antenna or the like configured of a plurality of antennae. For example, the number of physical antennae configuring the antenna port may not be specified, and the antenna port is defined as the minimum unit with which a terminal station can transmit a reference signal. Further, the antenna port may be defined as the minimum unit for multiplication of a weight of a precoding vector.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

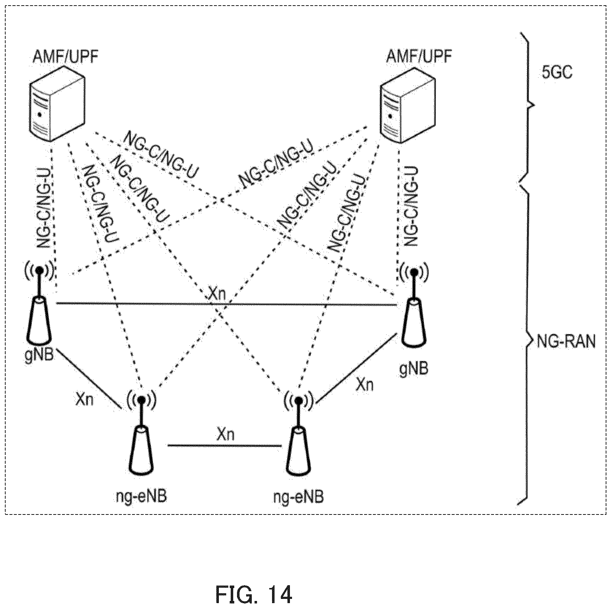

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the duration of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

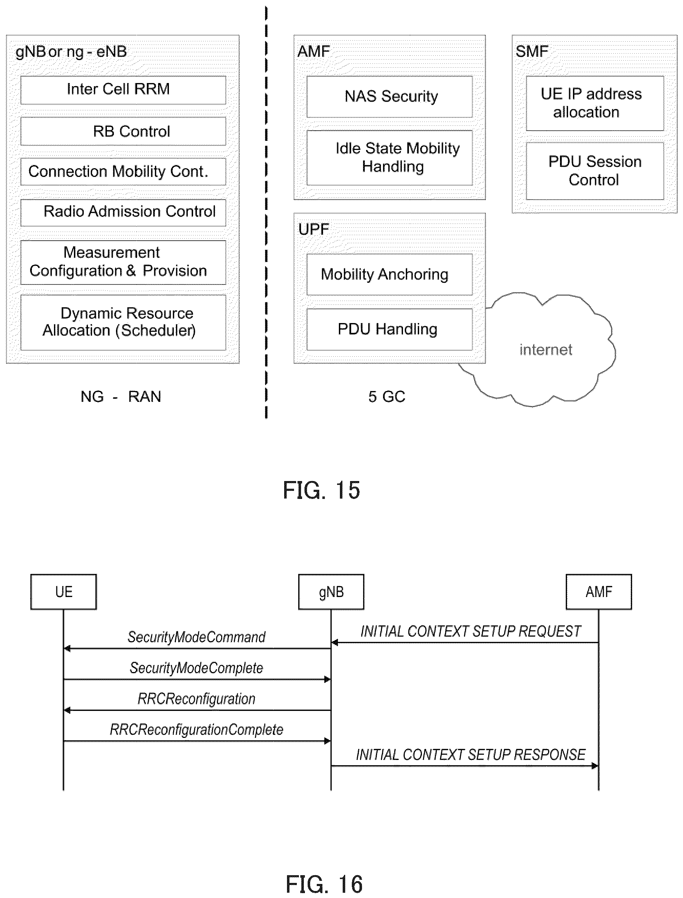

FIG. 15 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

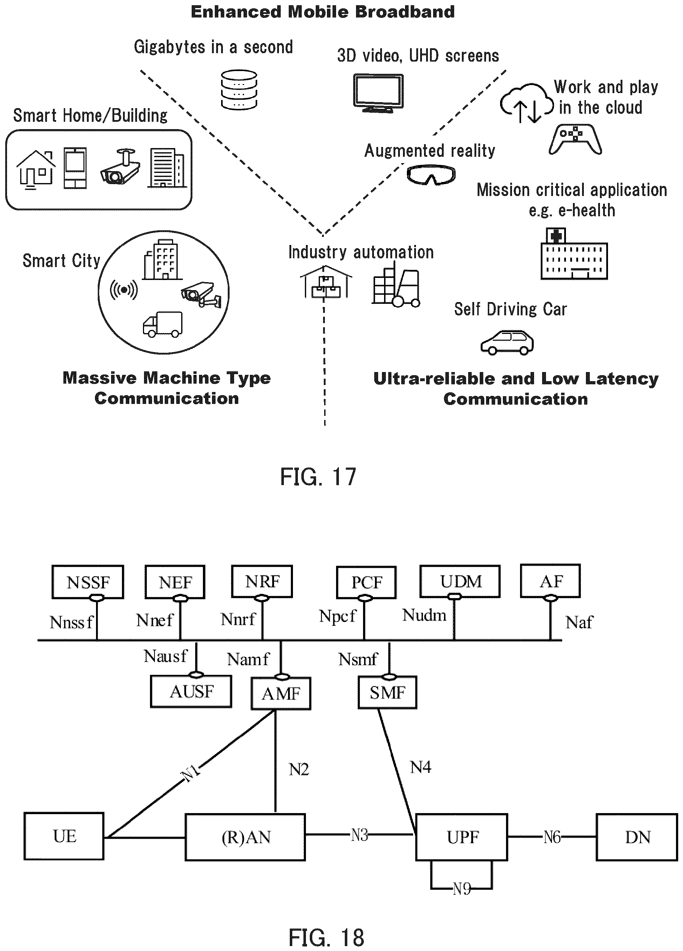

FIG. 17 illustrates some of the use cases for 5G NR. In 3rd generation partnership project new radio (3 GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 16. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 18 illustrates a 5G NR non-roaming reference architecture (see TS 23.501 v16.1.0, section 4.23). An Application Function (AF), e.g., an external application server hosting 5G services, exemplarily described in FIG. 17, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennae. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to an exemplary embodiment of the present disclosure includes: control circuitry, which, in operation, determines a transmission time for a transmission signal based on a sensing interval according to a sensing method for confirming availability of a channel; and transmission circuitry, which, in operation, transmits the transmission signal during the transmission time.

In an exemplary embodiment of the present disclosure, in a case where a duration of the sensing interval is longer than a duration of one symbol of the transmission signal, the control circuitry shortens the transmission time more than in a case where the duration of the sensing interval is shorter than a duration of a symbol of the transmission signal.

In an exemplary embodiment of the present disclosure, the control circuitry determines k, where k is an integer equal to or greater than one, such that a duration of k + one symbols is longer than the duration of the sensing interval, and the control circuitry shortens the transmission time by subtracting one k symbol or a plurality of k symbols from a number of symbols of the transmission signal.

In an exemplary embodiment of the present disclosure, in a case where the control circuitry confirms that the channel is available, the control circuitry configures a channel occupancy time, and the transmission circuitry transmits information on the channel occupancy time to another communication apparatus

In an exemplary embodiment of the present disclosure, in a case where the control circuitry confirms that the channel is available, the control circuit configures a channel occupancy time based on a slot number.

In an exemplary embodiment of the present disclosure, in a case where the control circuitry acquires information indicating that a channel occupancy time is equal to or longer than two slots, the control circuitry confirms the availability of the channel by using a sensing method that is used in a range in which the channel occupancy time is configured.

In an exemplary embodiment of the present disclosure, in a case where the control circuitry confirms that the channel is available, by using the sensing method that is used in the range in which the channel occupancy time is configured, the control circuitry determines a timing immediately after the sensing interval ends as a transmission start timing of the transmission signal.

In an exemplary embodiment of the present disclosure, the control circuitry adjusts the transmission start timing by changing a duration of a cyclic prefix to be added to a head of the transmission signal.

In an exemplary embodiment of the present disclosure, the control circuitry determines a transmission start timing of the transmission signal according to a priority of the transmission signal.

In an exemplary embodiment of the present disclosure, the control circuitry adjusts the transmission start timing of the transmission signal by changing a duration of a cyclic prefix to be added to a head of the transmission signal.

In an exemplary embodiment of the present disclosure, in a case where a transmission is reserved in a K-th slot, K being an integer equal to or greater than zero, and the control circuitry is not allowed to confirm that the channel in the K-th slot is available in a first sensing interval before a head of the K-th slot, the control circuitry confirms the availability of the channel in a second sensing interval rearward from the head in the K-th slot.

In an exemplary embodiment of the present disclosure, in a case where the control circuitry confirms that the channel is available in the second sensing interval rearward from the head in the K-th slot, the control circuitry maps a control signal after the second sensing interval in the K-th slot.

In an exemplary embodiment of the present disclosure, in a case where the control circuitry confirms, in a slot in which a control signal is detected, that the channel is available in the sensing interval starting from an end timing of the control signal, the control circuitry performs control such that a feedback signal is transmitted from the end timing of the sensing interval, and the transmission circuitry transmits the feedback signal based on the control of the control circuitry.

A communication method according to an exemplary embodiment of the present disclosure includes: determining, by a communication apparatus, a transmission time for a transmission signal based on a sensing interval according to a sensing method for confirming an availability of a channel; and transmitting, by the communication apparatus, the transmission signal during the transmission time that has been determined.

The disclosure of Japanese Patent Application No. 2022-069209, filed on April 20, 2022, including the specification, drawings and abstract, is incorporated herein by reference in its entirety.

### Industrial Applicability

An embodiment of the present disclosure is useful for radio communication systems.

100 Base station
101, 221 Radio transceiver
102, 220, 220a Controller
200, 200a Terminal
201 Receiver
202, 202a LBT carrier sensing processor
203 Signal separator
204 Demodulator
205, 205a Control signal sensing processor
206 Error correction decoder
207, 207a Guard period configurator
208, 208a Signal assigner
209 Error correction encoder
210 Modulator
211, 211a Control signal generator
212, 212a Transmitter

## Claims

1. A communication apparatus, comprising:
control circuitry, which, in operation, determines a transmission time for a transmission signal based on a sensing interval according to a sensing method for confirming availability of a channel; and
transmission circuitry, which, in operation, transmits the transmission signal during the transmission time.

2. The communication apparatus according to claim 1, wherein
in a case where a duration of the sensing interval is longer than a duration of one symbol of the transmission signal, the control circuitry shortens the transmission time more than in a case where the duration of the sensing interval is shorter than a duration of a symbol of the transmission signal.

3. The communication apparatus according to claim 2, wherein:
the control circuitry determines k such that a duration of k + one symbols is longer than the duration of the sensing interval, k being an integer equal to or greater than one, and
the control circuitry shortens the transmission time by subtracting one k symbol or a plurality of k symbols from a number of symbols of the transmission signal.

4. The communication apparatus according to claim 1, wherein
in a case where the control circuitry confirms that the channel is available, the control circuitry configures a channel occupancy time, and
the transmission circuitry transmits information on the channel occupancy time to another communication apparatus.

5. The communication apparatus according to claim 1, wherein
in a case where the control circuitry confirms that the channel is available, the control circuit configures a channel occupancy time based on a slot number.

6. The communication apparatus according to claim 1, wherein
in a case where the control circuitry acquires information indicating that a channel occupancy time is equal to or longer than two slots, the control circuitry confirms the availability of the channel by using a sensing method that is used in a range in which the channel occupancy time is configured.

7. The communication apparatus according to claim 6, wherein
in a case where the control circuitry confirms that the channel is available, by using the sensing method that is used in the range in which the channel occupancy time is configured, the control circuitry determines a timing immediately after the sensing interval ends as a transmission start timing of the transmission signal.

8. The communication apparatus according to claim 7, wherein
the control circuitry adjusts the transmission start timing by changing a duration of a cyclic prefix to be added to a head of the transmission signal.

9. The communication apparatus according to claim 1, wherein
the control circuitry determines a transmission start timing of the transmission signal according to a priority of the transmission signal.

10. The communication apparatus according to claim 9, wherein
the control circuitry adjusts the transmission start timing of the transmission signal by changing a duration of a cyclic prefix to be added to a head of the transmission signal.

11. The communication apparatus according to claim 1, wherein
in a case where a transmission is reserved in a K-th slot and the control circuitry is not allowed to confirm that the channel in the K-th slot is available in a first sensing interval before a head of the K-th slot, the control circuitry confirms the availability of the channel in a second sensing interval rearward from the head in the K-th slot, K being an integer equal to or greater than zero.

12. The communication apparatus according to claim 11, wherein
in a case where the control circuitry confirms that the channel is available in the second sensing interval rearward from the head in the K-th slot, the control circuitry maps a control signal after the second sensing interval in the K-th slot.

13. The communication apparatus according to claim 1, wherein
in a case where the control circuitry confirms, in a slot in which a control signal is detected, that the channel is available in the sensing interval starting from an end timing of the control signal, the control circuitry performs control such that a feedback signal is transmitted from the end timing of the sensing interval, and
the transmission circuitry transmits the feedback signal based on the control of the control circuitry.

14. A communication method, comprising:
determining, by a communication apparatus, a transmission time for a transmission signal based on a sensing interval according to a sensing method for confirming an availability of a channel; and
transmitting, by the communication apparatus, the transmission signal during the transmission time that has been determined.
